# EUROPÄISCHE PATENTSCHRIFT

(11) **EP 1 913 114 B1**
(45) Veröffentlichungstag und Bekanntmachung des Hinweises auf die Patenterteilung: **09.03.2011**
(21) Anmeldenummer: 06762965.9
(22) Anmeldetag: 03.08.2006
(51) Int. Cl.: C09K 19/30

(54) **FLÜSSIGKRISTALLINES MEDIUM**
LIQUID-CRYSTAL MEDIUM
MILIEU CRISTALLIN LIQUIDE

(30) Priorität: 09.08.2005 DE 102005048064
(43) Veröffentlichungstag der Anmeldung: 23.04.2008
(73) Patentinhaber: Merck Patent GmbH, 64293 Darmstadt (DE)
(72) Erfinder: KLASEN-MEMMER, Melanie, 67259 Heuchelheim (DE); MEYER, Elisabeth, 63456 Hanau (DE); PAULUTH, Detlef, 64372 Ober-Ramstadt (DE); TAUGERBECK, Andreas, 64285 Darmstadt (DE)
(86) Internationale Anmeldenummer: PCT/EP2006/007692
(87) Internationale Veröffentlichungsnummer: WO 2007/017180

(56) Entgegenhaltungen:
- EP-A- 1 302 523
- EP-A1- 0 834 491
- WO-A-98/13321
- WO-A-2006/002747
- WO-A-2006/002952
- DE-A1- 10 058 664
- DE-A1- 10 218 976
- GB-A- 2 327 682
- US-B1- 6 497 828

## Beschreibung

Die Erfindung betrifft ein flüssigkristallines Medium mit negativer dielektrischer Anisotropie auf der Basis eines Gemisches von polaren Verbindungen, welches eine Verbindung der Formel 12, 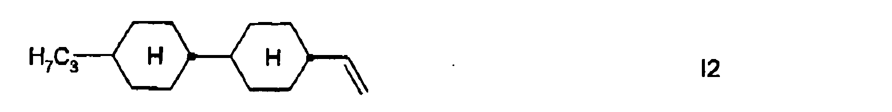 in Mengen von 30-60 Gew.% bezogen auf das Medium,
enthält,
und zusätzlich eine oder mehrere Verbindungen der Formeln IIA und/oder IIB enthält, 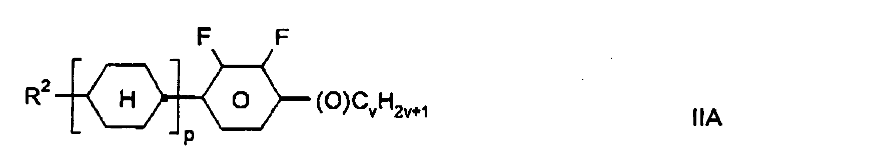 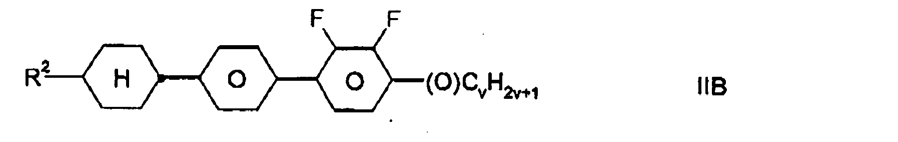 worin
- R²: einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 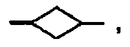 -C≡C-, -CO-, -CO-O-, -O-CO- oder -O-CO-O- so ersetzt sein
- p: können, dass O-Atome nicht direkt miteinander verknüpft sind, 1 oder 2, und
- v: 1 bis 6
bedeuten. Derartige Medien sind insbesondere für elektrooptische Anzeigen mit einer Aktivmatrix-Addressierung basierend auf dem ECB-Effekt sowie für IPS-Anzeigen (In plane switching) zu verwenden. Vorzugsweise besitzt das erfindungsgemäße Medium eine negative dielektrische Anisotropie.

Flüssigkristalline Mischungen enthaltend Verbindungen der Formel I2 sind beispielsweise aus den Patentanmeldungen EP 1 302 523 A1, WO 98/13321 A1, DE 102 18976, DE 100 58 664 A1, US 6,497,828 B1, GB 2 327 682 A, EP 0 834 491, WO 2006/002952 A1, EP 1 876 215 A1, WO 2005/123879 und EP 1 724 324 A1 bekannt. Das erfindungsgemäße Mischungskonzept wird im Stand der Technik nicht beschrieben.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den sogenannten IPS-Effekt verwenden, können dielektrisch negative Flüsigkristallmedien zum Einsatz kommen.

Anzeigen, die den ECB-Effekt verwenden haben sich als sogenannte VAN- (Vertically Aligned Nematic) Anzeigen in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology...", SID 2004 International Symposium, Digest of Technical Papers, XXXV, Buch II, S. 750 bis 753) und PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763) neben ASV- (Avanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen und IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759), neben den lange bekannten neben TN- (Twisted Nematic) Anzeigen, als eine der drei zur Zeit wichtigsten neueren Typen von Flüssigkristallanzeigen insbesondere für Fernsehanwendungen etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere,Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil-oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen. Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde MFK-Anzeigen, insbesondere für Monitor und TV-Anwendungen, welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen. Insbesondere muss für Monitore und Fernseher gewährleistet sein, dass diese auch bei extrem hohen und extrem niedrigen Temperaturen arbeiten.

Überraschenderweise wurde nun gefunden, dass diese Aufgabe gelöst werden kann, wenn man in diesen Anzeigeelementen nematische Flüssigkristattmischungen verwendet, die mindestens eine Verbindung der Formel I2 in hohen Konzentrationen enthalten. Verbindungen der Formel I2 sind beispielsweise bekannt aus der EP 0 168 683 B1 und EP 0 122 389 B1.

Gegenstand der Erfindung ist somit ein flüssigkdstallines Medium auf der Basis eines Gemisches von polaren Verbindungen, welches mindestens eine Verbindung der Formel I2 in Mengen von 30-60 Gew.% enthält.

Die erfindungsgemäßen Mischungen zeigen sehr breite nematische Phasenbereiche mit Klärpunkten ≥ 70 °C, sehr günstige Werte für die kapazitive Schwelle, relativ hohe Werte für die Holding Ratio und gleichzeitig sehr gute Tieftemperaturstabilitäten bei -30 °C und -40 °C sowie sehr geringe Rotationsviskositäten und niedrige Schaltzeiten. Die erfindungsgemäßen Mischungen, die ≥ 30 Gew.% an 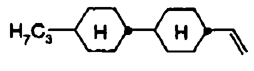 enthalten, zeichnen sich dadurch aus, dass zusätzlich zur Verbesserung der Rotationsviskosität γ₁ eine Erhöhung der elastischen Konstanten K₃₃ zur Verbesserung der Schaltzeiten beiträgt.

Einige bevorzugte Ausführungsformen der erfindungsgemäßen Mischungen werden im folgenden genannt:
a) Flüssigkristallines Medium, wobei der Anteil an Verbindungen der Formel I2 im Gesamtgemisch mindestens 30 Gew.%, vorzugsweise mindestens 35 Gew.%, besonders bevorzugt ≥ 38 Gew.%, beträgt.
b) Flüssigkristallines Medium, welches zusätzlich eine Verbindung der Formel 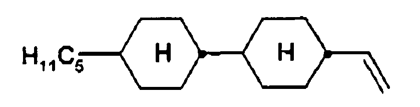 enthält, vorzugsweise in Mengen von ≤ 25 Gew.%.
c) Flüssigkristallines Medium, welches eine oder mehrere Verbindungen der Formeln IIA und/oder IIB enthält, 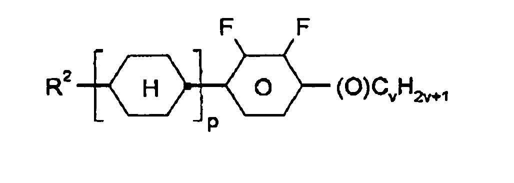 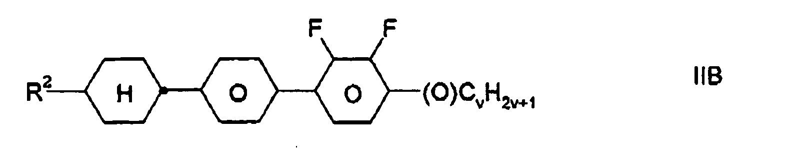 worin
- R²: H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 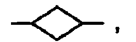 -C≡C-, -CF₂O-, -OCF₂-, -OC-O- oder -O-CO- so ersetzt sein können, dass O-Atome nicht direkt miteinander verknüpft sind,
- p: 1 oder 2, und
- v: 1 bis 6
bedeutet.
d) Flüssigkristallines Medium, welches zusätzlich eine oder mehrere Verbindungen der Formel III enthält, 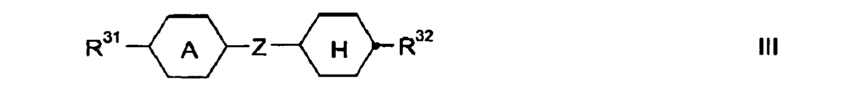 worin
- R³¹ und R³²: jeweils unabhängig voneinander einen geradkettigen Alkyl-, Alkoxyalkyl- oder Alkoxyrest mit bis zu 12 C-Atomen, und 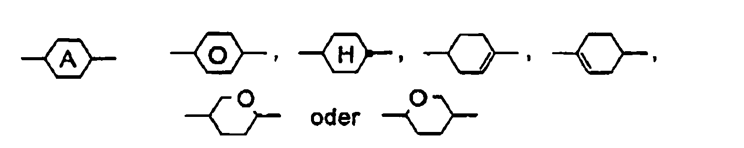
- Z: Einfachbindung, -CH₂CH₂-, -CH=CH-, -CF₂O-, -OCF₂-, -CH₂O-, -OCH₂-, -COO-, -OCO-, -C₂F₄-, -CF=CF-
bedeuten.

e) Flüssigkristallines Medium, wobei der Anteil an Verbindungen der Formeln IIA und/oder IIB im Gesamtgemisch mindestens 20 Gew.% beträgt.
f) Flüssigkristallines Medium, wobei der Anteil der Verbindungen der Formel III im Gesamtgemisch mindestens 5 Gew.% beträgt.
g) Flüssigkristallines Medium, welches mindestens eine Verbindung ausgewählt aus den Teilformeln I1 und I3 bis 19 enthält: 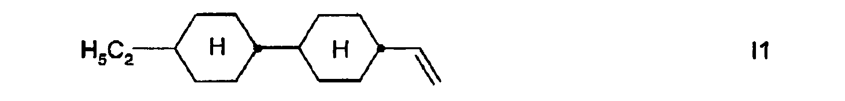 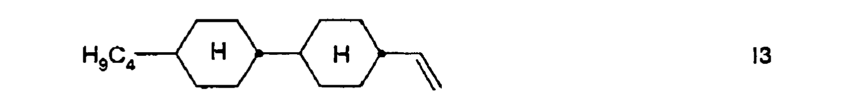 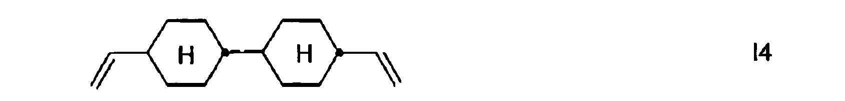 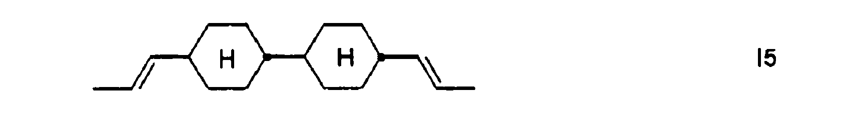 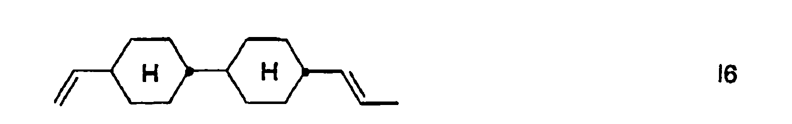 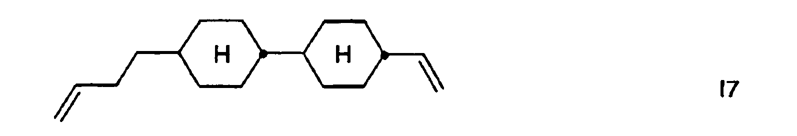 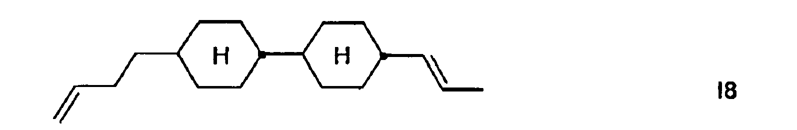 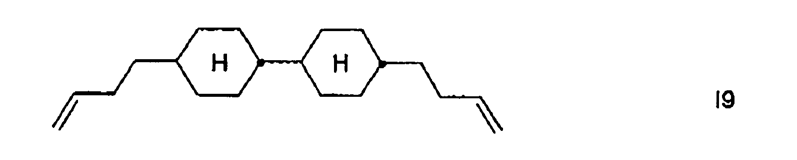 Besonders bevorzugte erfindungsgemäße Medien enthalten eine Verbindung der Formel 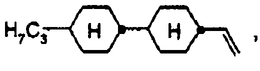 vorzugsweise in Mengen von 30-60 Gew.%, insbesondere 35-60 Gew.% und eine Verbindung der Formel 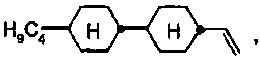 vorzugsweise in Mengen von 30-40 Gew.%, insbesondere von 35-40 Gew.%. Sofern die erfindungsgemäße sowohl eine Verbindung der Formel 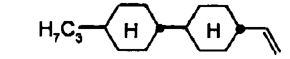 und eine Verbindung der Formel 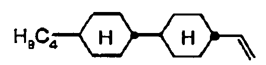 enthält, beträgt die Gesamtkonzentration dieser beiden Verbindungen in der Mischung ≥ 40 Gew.%, vorzugsweise ≥ 45 Gew.%, insbesondere 50 Gew.%.
h) Flüssigkristallines Medium, welches mindestens eine oder mehrere Verbindungen aus der Gruppe 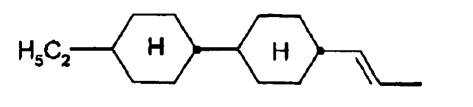 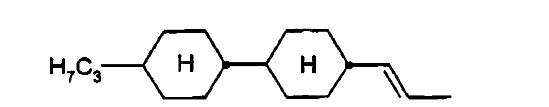 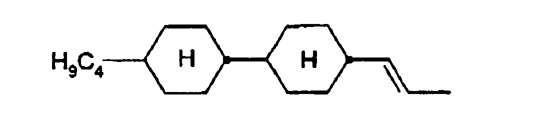 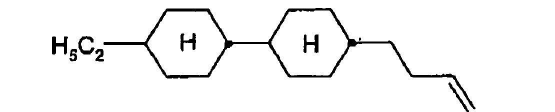 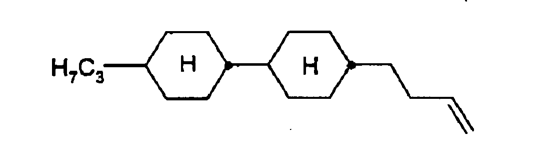 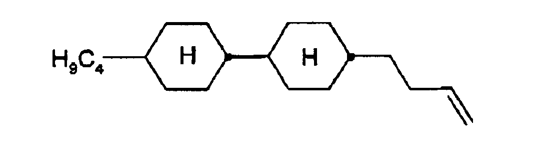 enthält.
i) Flüssigkristallines Medium, welches zusätzlich eine oder mehrere Verbindungen ausgewählt aus den Formeln IIIa bis IIIh enthält: 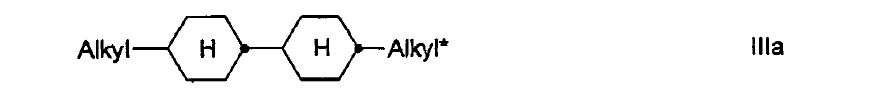 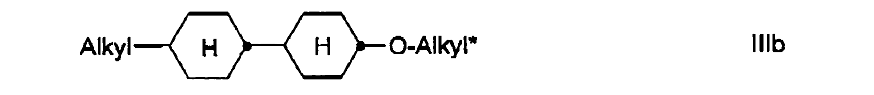 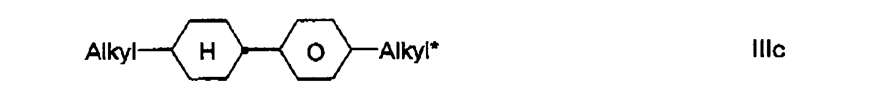 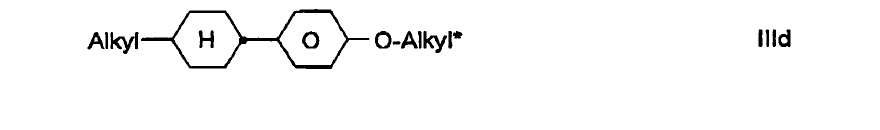 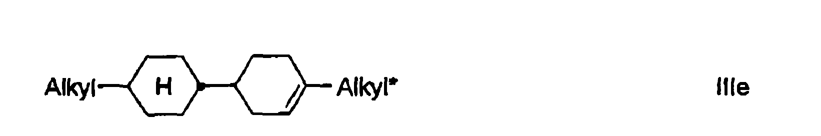 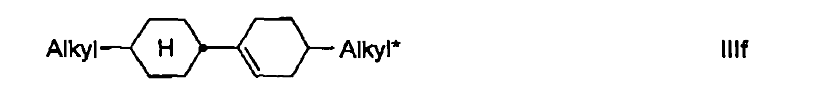 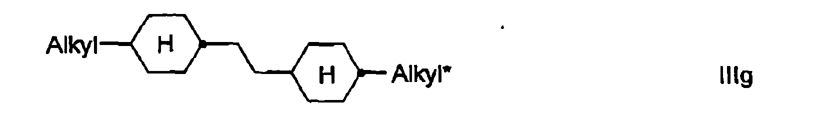 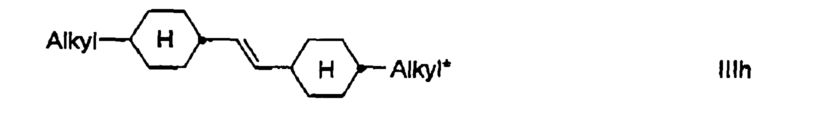 worin
- Alkyl und und Alkyl*: jeweils unabhängig voneinander einen geradkettigen Alkylrest mit 1-6 C-Atomen, und
bedeuten.
Vorzugsweise enthält das erfindungsgemäße Medium mindestens eine Verbindung der Formel IIIa, Formel IIIb und/oder Formel IIId.
j) Flüssigkristallines Medium, welches

| | |
|---|---|
| 30-60 | Gew.% der Verbindung der Formel 12 und |
| | |
| 20-70 | Gew.% einer oder mehrerer Verbindungen der Formeln IIA und/oder IIB |

enthält bzw. daraus besteht, wobei die Gesamtmenge der Verbindungen der Formeln 12 und IIA und/oder IIB ≤ 100 Gew.% beträgt.
k) Flüssigkristallines Medium, welches zusätzlich eine oder mehrere Verkernverbindungen der Formeln, 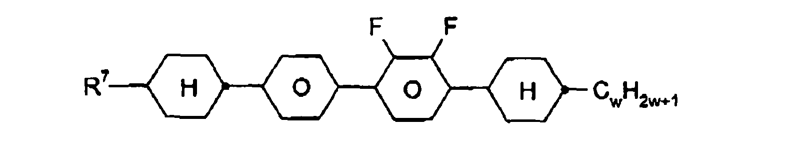 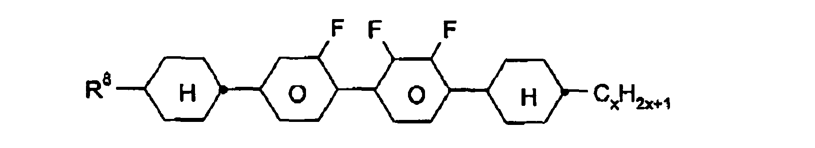 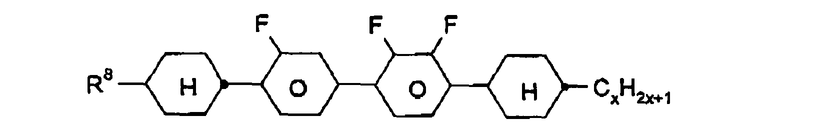 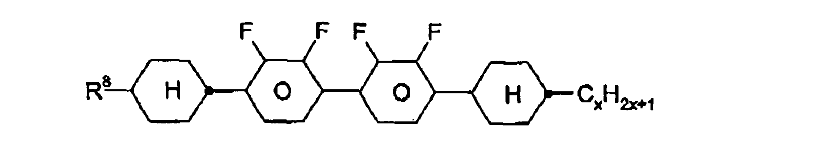 worin
- R⁷ und R⁸: jeweils unabhängig voneinander eine der in Anspruch 2 für R² angegebenen Bedeutung haben, und
- w und x: jeweils unabhängig voneinander 1 bis 6
bedeuten,
enthält.
l) Flüssigkristallines Medium, welches zusätzlich eine oder mehrere Verbindungen der Formeln Y-1 bis Y-11 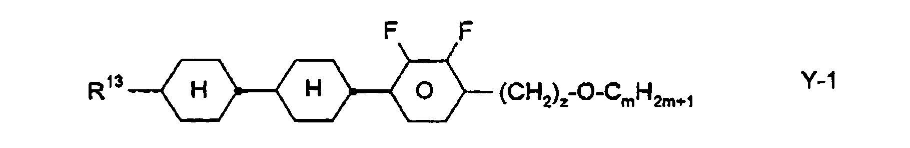 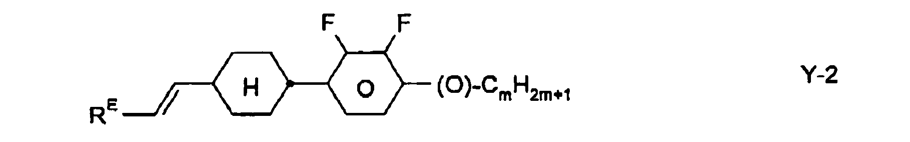 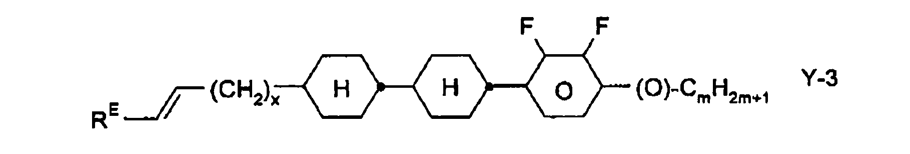 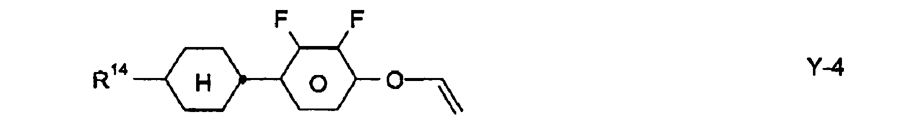 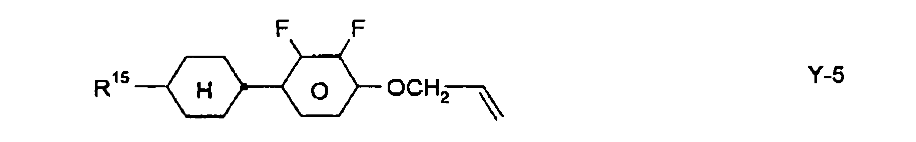 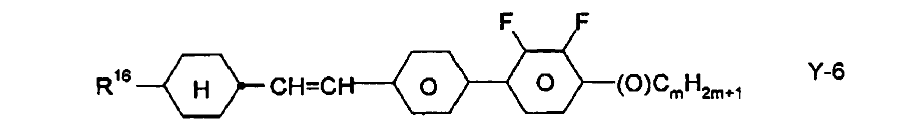 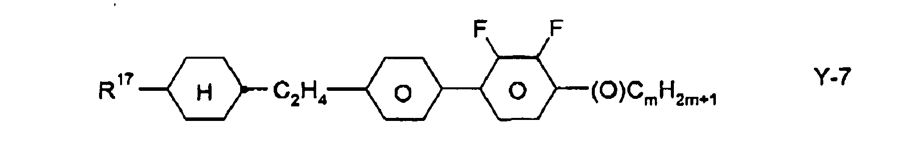 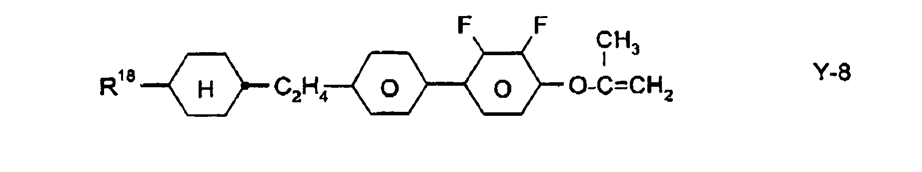 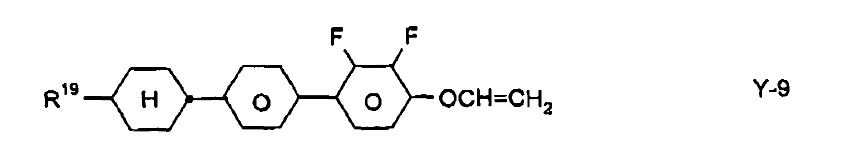 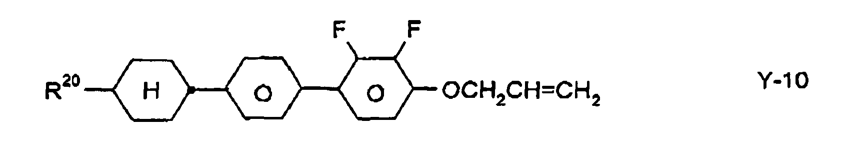 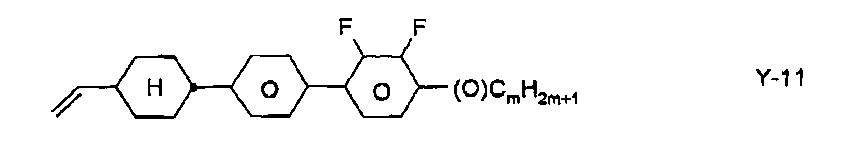 enthält,
worin R¹³-R²⁰ jeweils unabhängig voneinander, die für R² angegebenen Bedeutungen haben, und z und m jeweils unabhängig voneinander 1-6 bedeuten. R^{E} bedeutet H, CH₃, C₂H₅ oder n-C₃H₇. x bedeutet 0, 1, 2 oder 3.
Insbesondere bevorzugt enthält das erfindungsgemäße Medium eine oder mehrere Verbindungen der Formeln Y-2, Y-3 und/oder Y-11 mit einer Alkenylseitenkette, vorzugsweise in Mengen von ≥ 5 Gew.%.
m) Flüssigkristallines Medium, welches zusätzlich eine oder mehrere Verbindungen der Formeln 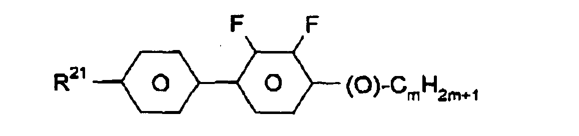 vorzugsweise in Mengen von > 3 Gew.%, insbesondere ≥ 5 Gew.%, und ganz besonders bevorzugt von 5-25 Gew.% enthält,
wobei
R²¹ die für R² angegebenen Bedeutungen hat und m 1-6 bedeutet.
n) Flüssigkristallines Medium enthaltend zusätzlich ein oder mehrere fluorierte Terphenyle der Formeln T-1 bis T-22, 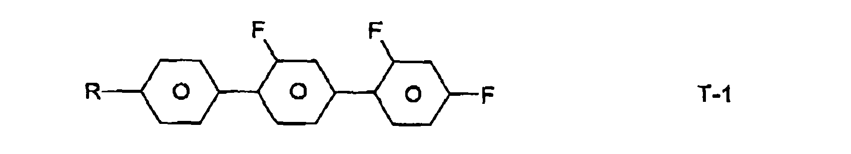 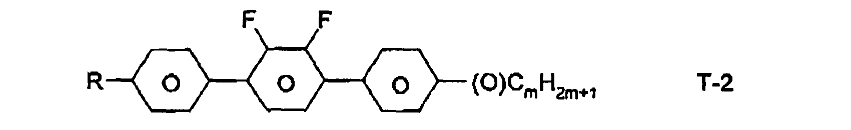 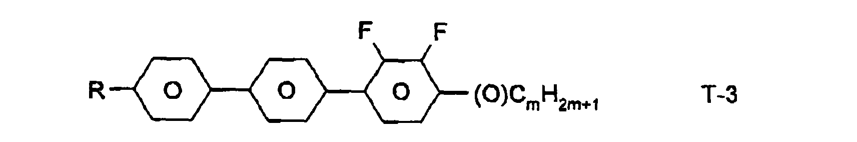 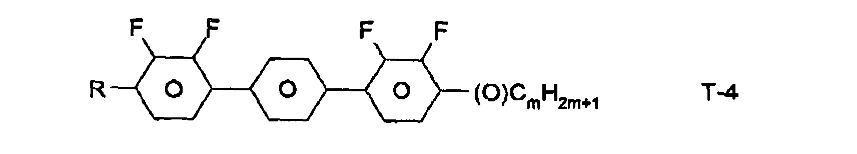 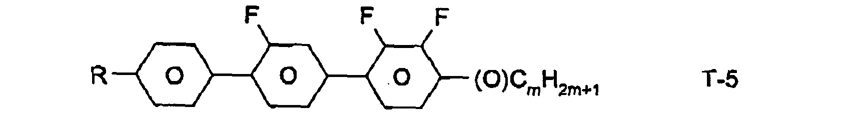 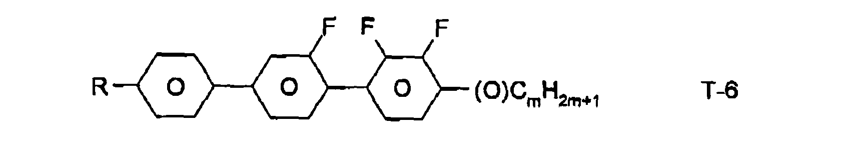 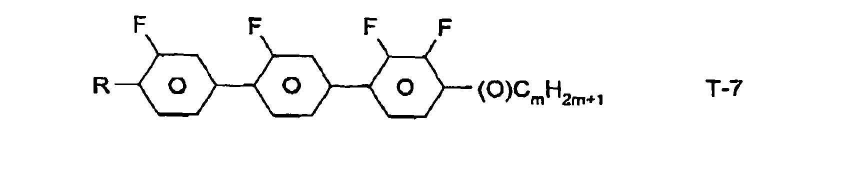 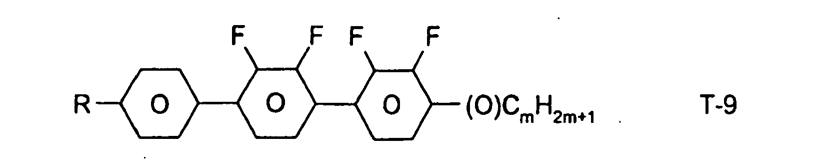 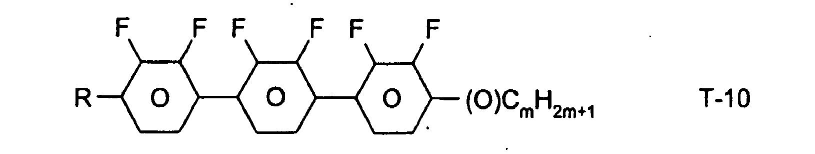 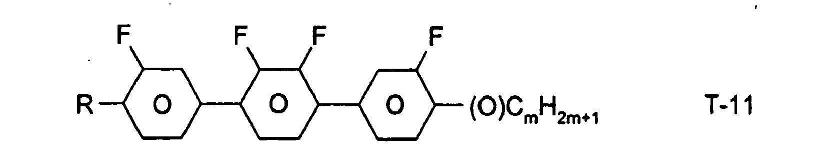 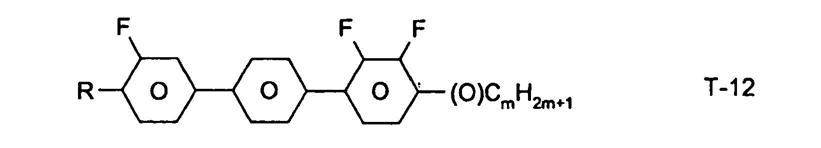 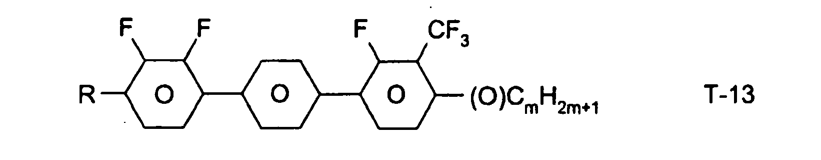 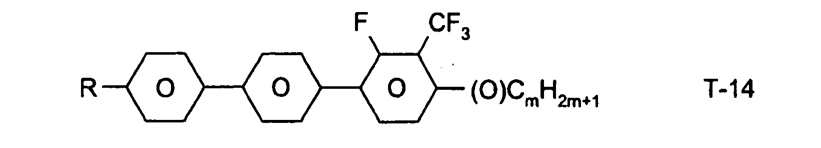 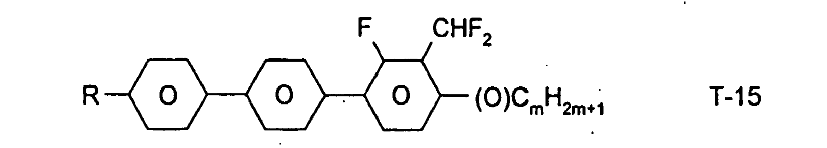 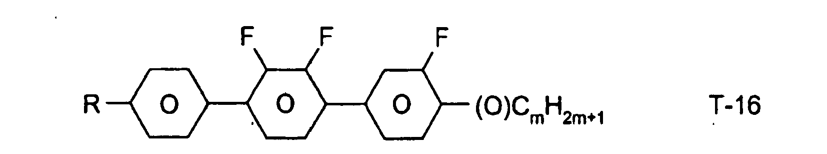 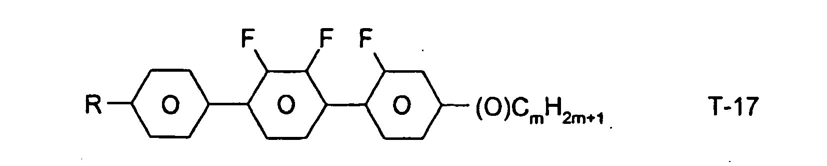 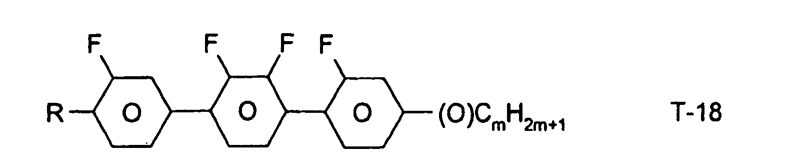 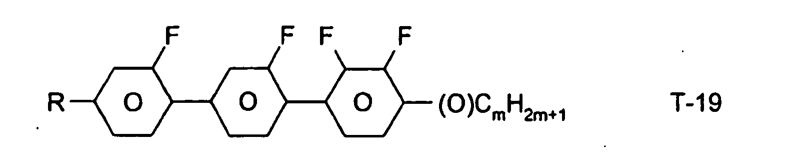 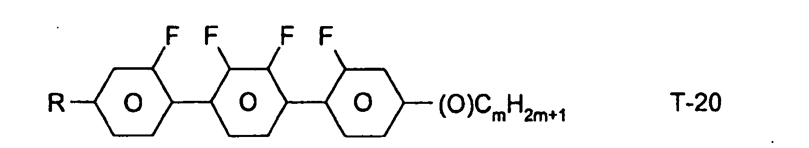 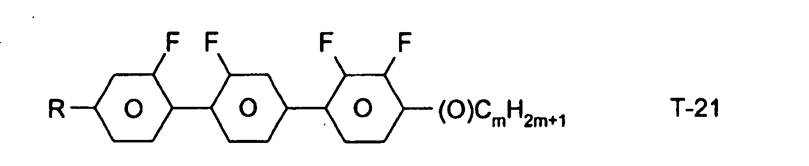 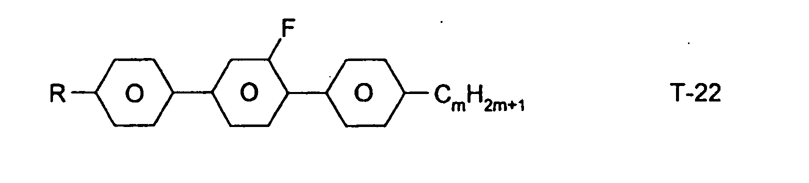 worin
R die für R² angegebenen Bedeutungen hat.
Vorzugsweise ist R geradkettiges Alkyl, Alkoxy oder Alkoxyalkyl mit jeweils 1-6 C-Atomen, Alkenyl oder Alkenyloxy mit 2-6 C-Atomen. Vorzugsweise bedeutet R Methyl, Ethyl, Propyl, Butyl, Pentyl, Hexyl Methoxy, Ethoxy, Propoxy, Butoxy, Pentoxy.
Das erfindungsgemäße Medium enthält die Terphenyle der Formeln T-1 bis T-22 vorzugsweise in Mengen von 2-30 Gew.%, insbesondere von 5-20 Gew.%.
Besonders bevorzugt sind Verbindungen der Formeln T-1, T-2, T-3 und T-22. In diesen Verbindungen bedeutet R vorzugsweise Alkyl, ferner Alkoxy jeweils mit 1-5 C-Atomen.
Vorzugsweise werden die Terphenyle in Mischungen mit einem Δn ≥ 0,10 in Kombination mit den Verbindungen der Formeln 12, IIA, IIB und III eingesetzt. Bevorzugte Mischungen enthalten 2-20 Gew.% Terphenyle und 5-60 Gew.% der Verbindungen der Formel IIA und/oder IIB.
o) Flüssigkristallines Medium enthaltend zusätzlich ein oder mehrere Biphenyle der Formeln B-1 bis B-4, 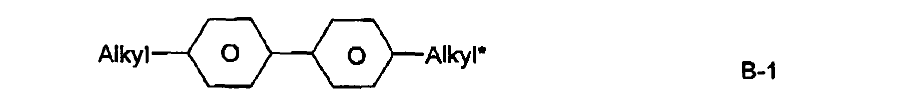 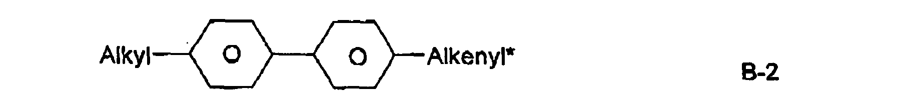 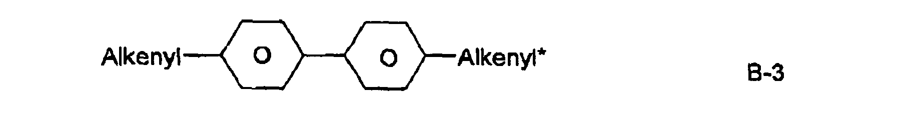 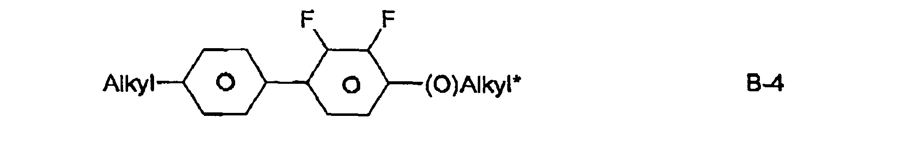 worin
- Alkyl und Alkyl*: jeweils unabhängig voneinander einen gerad- kettigen Alkylrest mit 1-6 C-Atomen, und
- Alkenyl und Alkenyl*: jeweils unabhängig voneinander einen geradkettigen Alkenylrest mit 2-6 C-Atomen
bedeuten.

Der Anteil der Biphenyle der Formeln B-1 bis B-4 der Gesamtmischung beträgt vorzugsweise mindestens 3 Gew.%, insbesondere ≥ 5 Gew.%.
Von den Verbindungen der Formeln B-1 bis B-4 sind die Verbindungen der Formeln B-1 und B-4 insbesondere bevorzugt.
Besonders bevorzugte Biphenyle sind 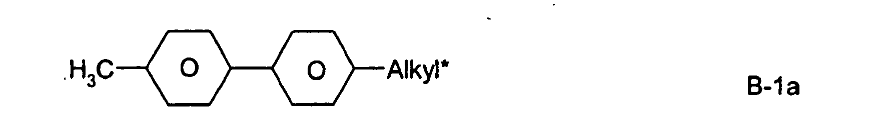 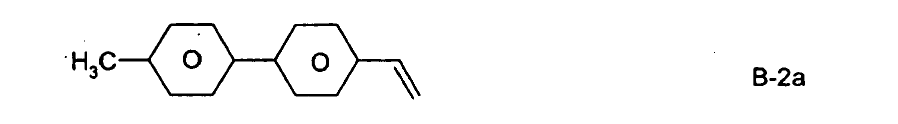 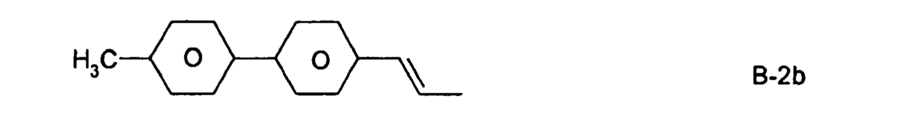 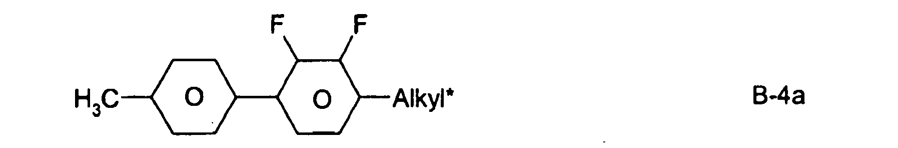 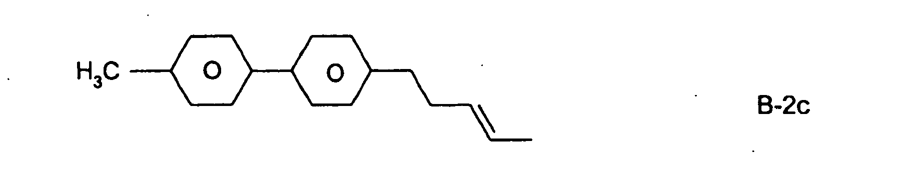 worin R Alkyl, Alkenyl, Alkoxy, Alkoxyalkyl, Alkenyloxy mit 1 bzw. 2 bis 6 C-Atomen bedeutet und Alkenyl die oben angegebene Bedeutung hat. Insbesondere bevorzugt enthält das erfindungsgemäße Medium eine oder mehrere Verbindungen der Formeln B-1a und/oder B-2c.
p) Flüssigkristallines Medium, welches zusätzlich eine oder mehrere Verbindungen der Formeln 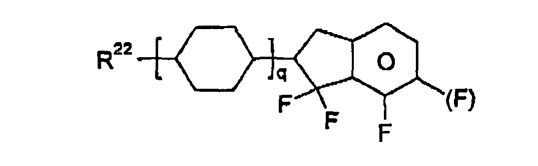 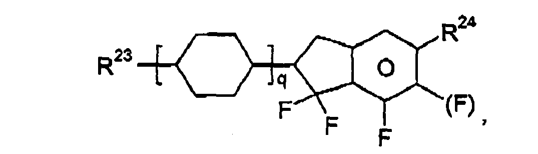 vorzugsweise in Mengen von > 3 Gew.%, insbesondere ≥ 5 Gew.%, und ganz besonders bevorzugt von 5-25 Gew.%, enthält,
wobei
R²²⁻²³ die für R¹¹ angegebenen Bedeutungenen haben und R²⁴ CH₃, C₂H₅ oder n-C₃H₇ und q 1 oder 2 bedeutet.
q) Flüssigkristallines Medium enthaltend mindestens eine Verbindung der Formeln Z-1 bis Z-22, 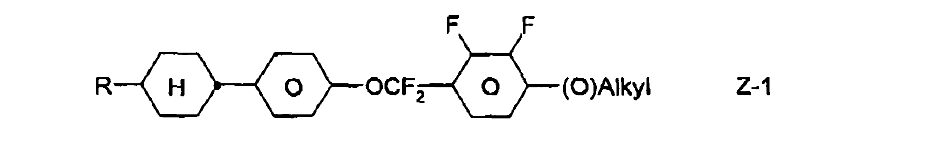 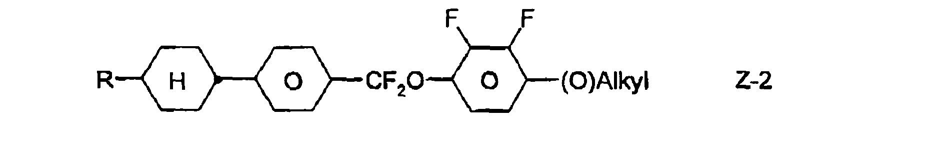 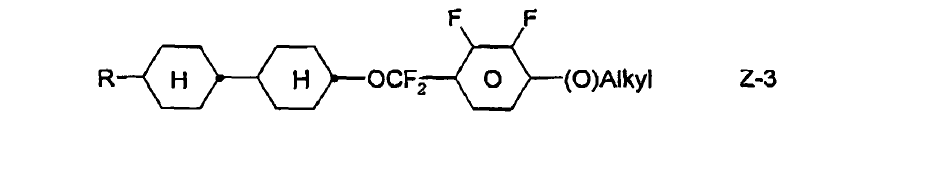 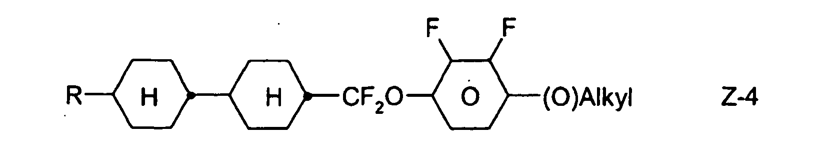 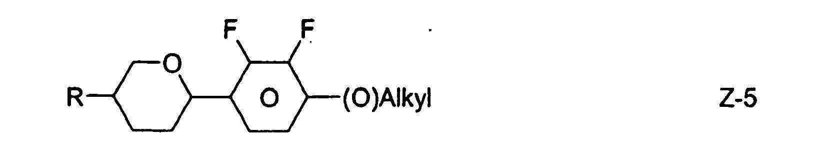 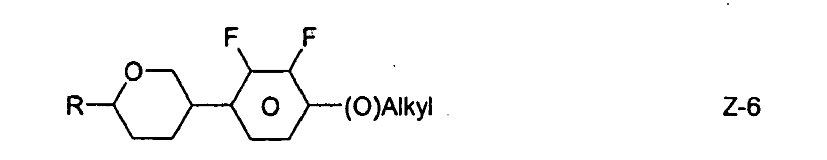 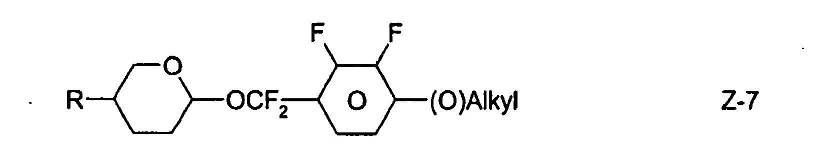 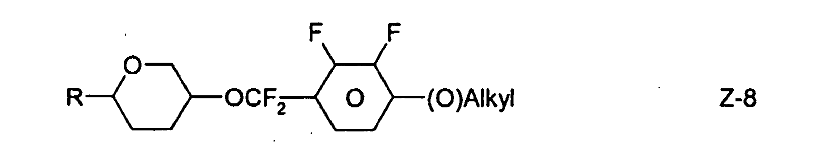 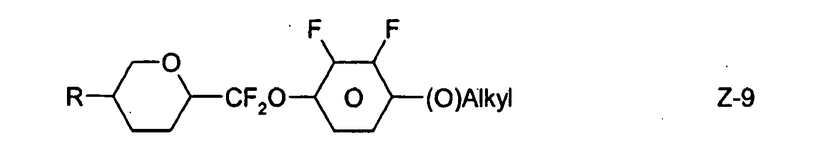 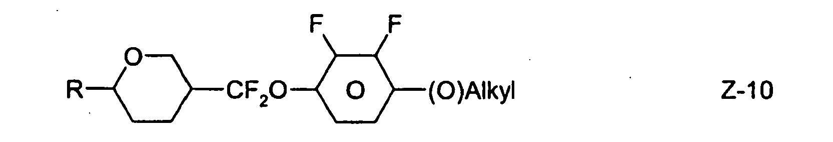 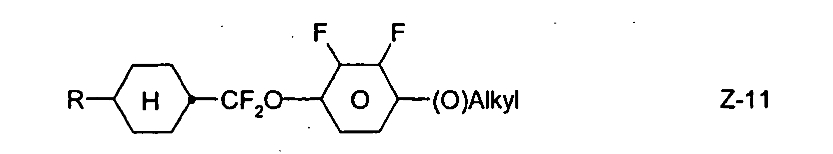 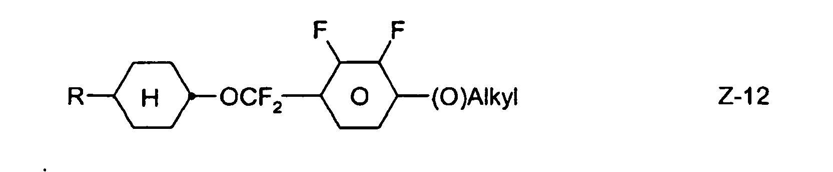 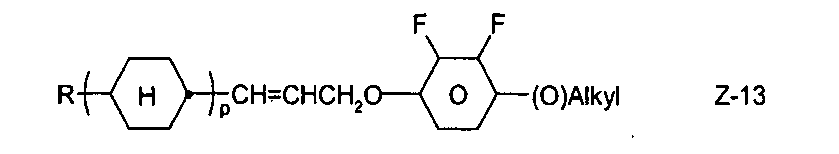 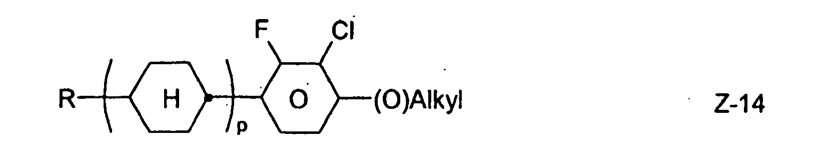 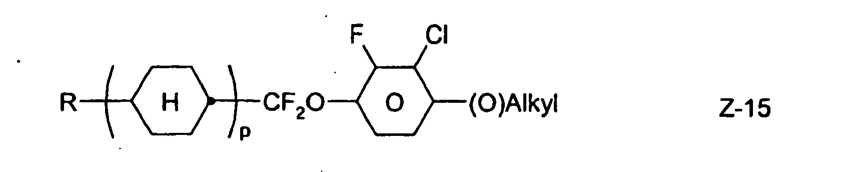 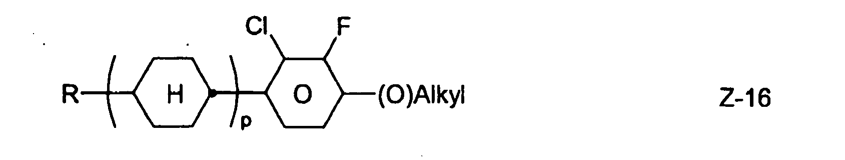 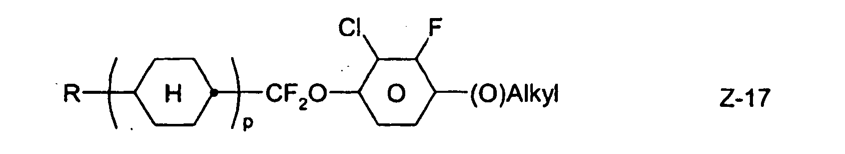 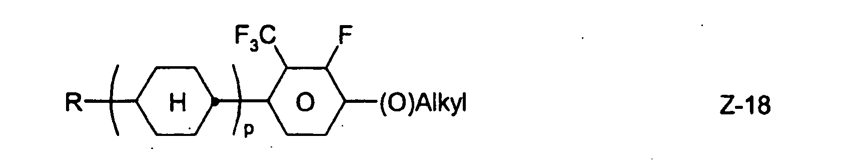 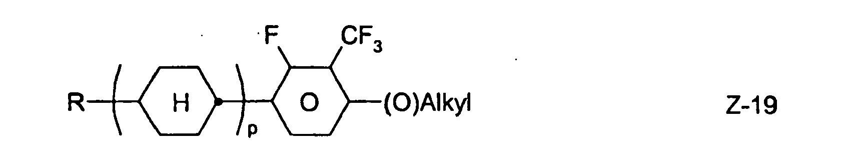 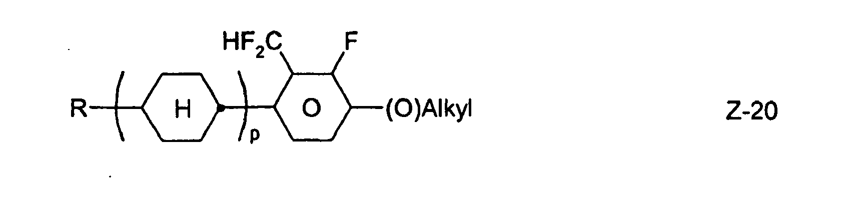 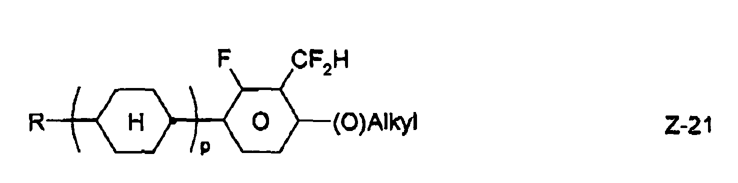 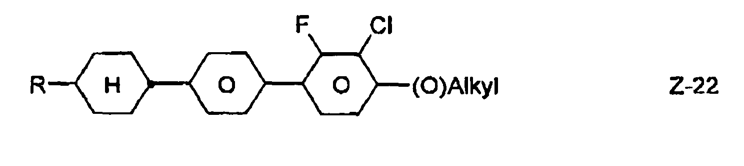 worin R und Alkyl die oben angegebenen Bedeutungen haben und p 1 oder 2 ist,
vorzugsweise in Mengen von ≥ 5 Gew.%, insbesondere ≥ 10 Gew.%.
Insbesondere bevorzugt sind Medien, die eine, zwei oder mehr Verbindungen der Formeln Z-1 bis Z-9 enthalten und zusätzlich eine, zwei oder mehr Verbindungen der Formel II. Vorzugsweise enthalten derartige Mischungen ≥ 10 Gew.% an Verbindungen der Formel II.
r Flüssigkristallines Medium enthaltend mindestens eine Verbindung der Formeln O-1 bis O-12, 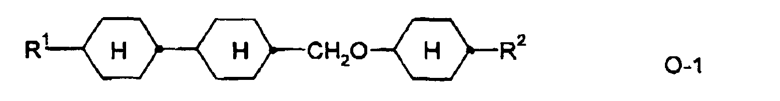 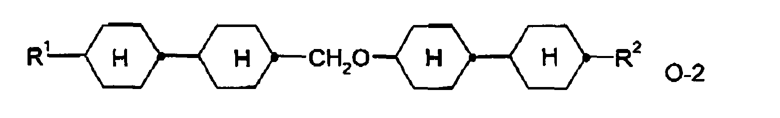 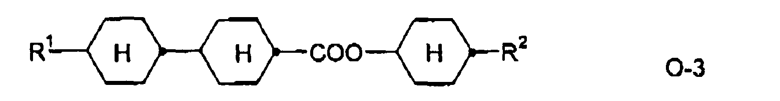 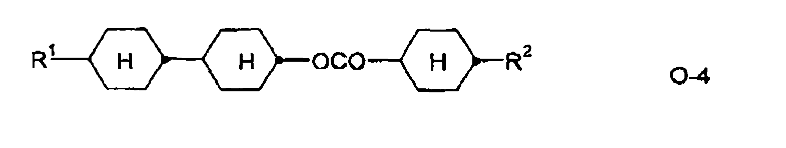 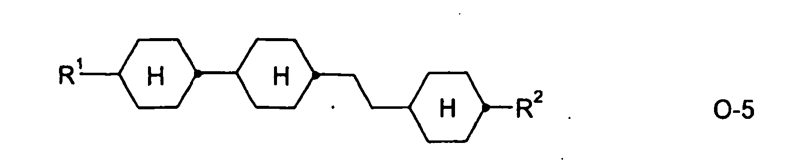 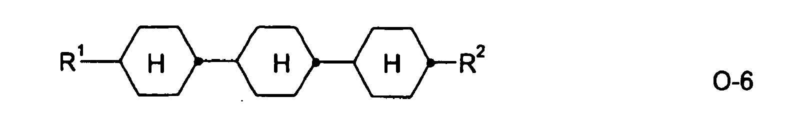 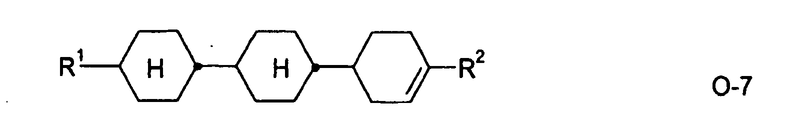 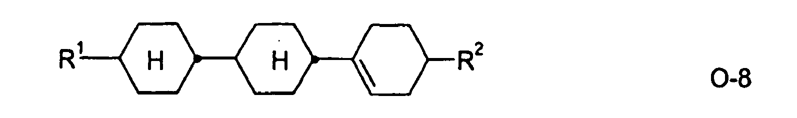 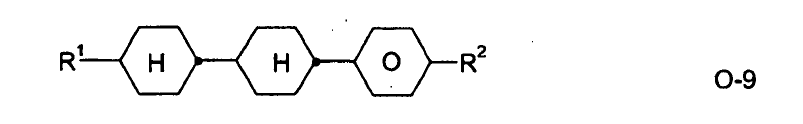 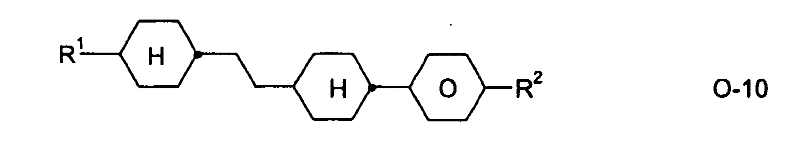 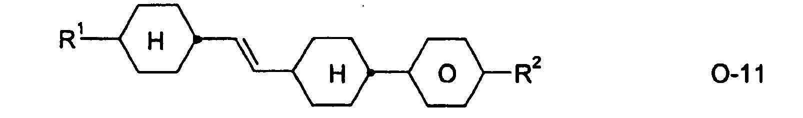 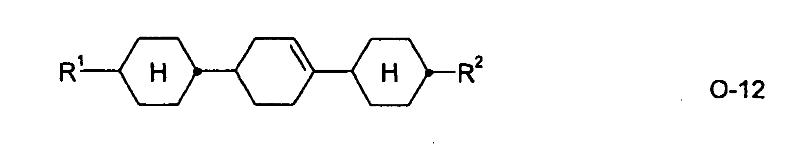 worin R¹ und R² die für R² angegebenen Bedeutungen haben, vorzugsweise bedeuten R¹ und R² jeweils unabhängig voneinander geradkettiges Alkyl, ferner Alkenyl. s) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 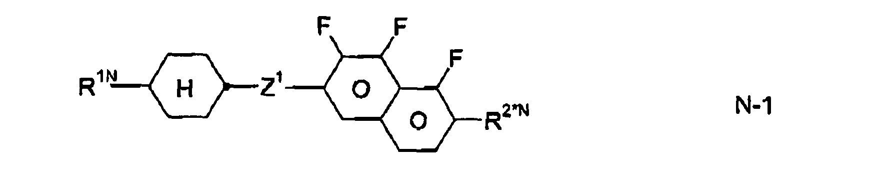 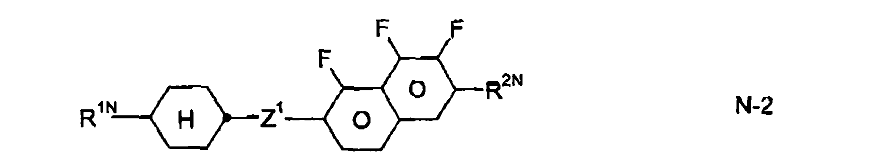 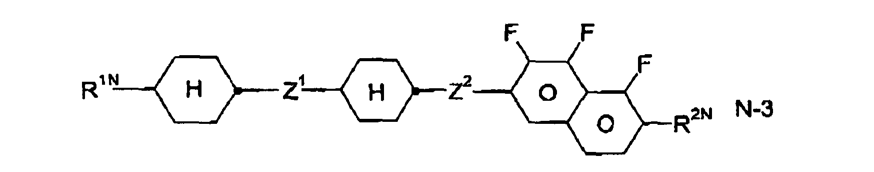 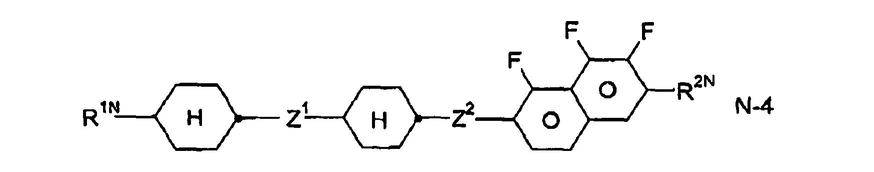 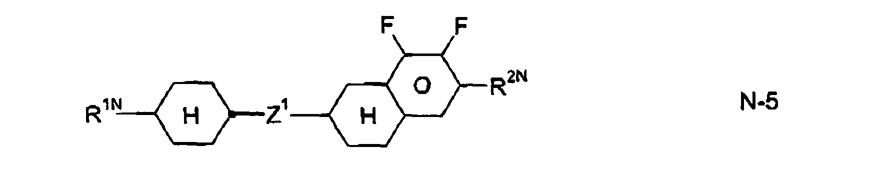 worin R^{1N} und R^{2N} jeweils unabhängig voneinander die für R² angegebenen Bedeutungen haben, vorzugsweise geradkettiges Alkyl, geradkettiges Alkoxy oder geradkettiges Alkenyl bedeuten, und Z, Z' und Z² jeweils unabhängig voneinander -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O- -OCH₂-, -COO-, -OCO-, -C₂F₄-, -CF=CF-, -CF=CH-, -CH=CF-, -CF₂O-, -OCF₂-, -CH₂- oder eine Einfachbindung
bedeuten.
t) Bevorzugte Mischungen enthalten eine oder mehrere Difluorbenzochroman-Verbindungen der Formel BC 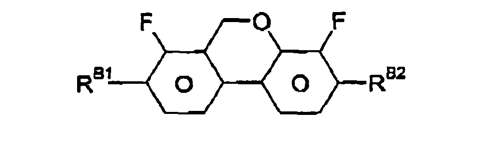 worin
R^{B1} und R^{B2} jeweils unabhängig voneinander die Bedeutung von R² aufweisen, vorzugsweise in Mengen von 3 bis 20 Gew.%, insbesondere in Mengen von 3 bis 15 Gew.%.
Besonders bevorzugte Verbindungen der Formel BC sind die Verbindungen BC-1 bis BC-7, 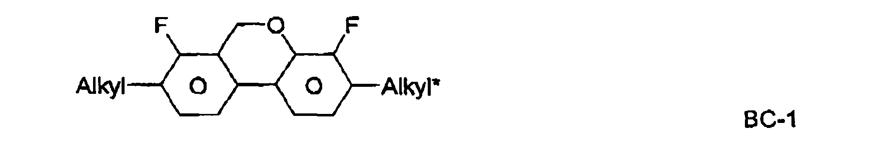 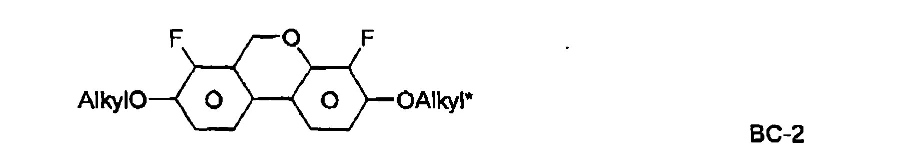 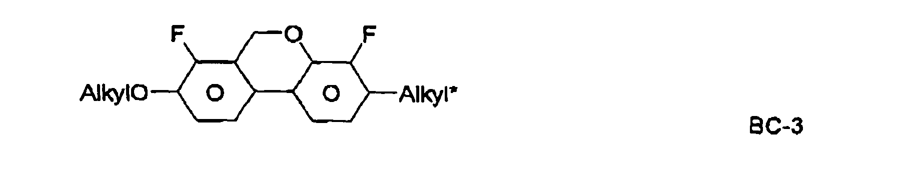 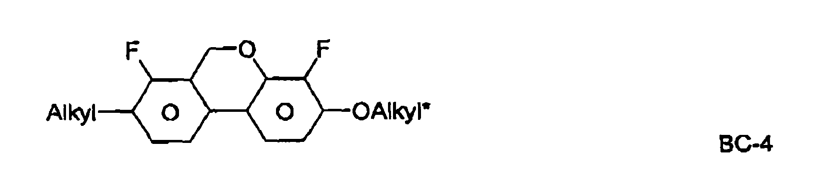 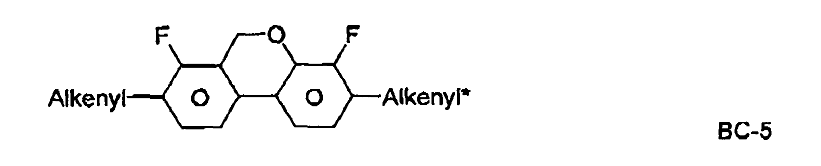 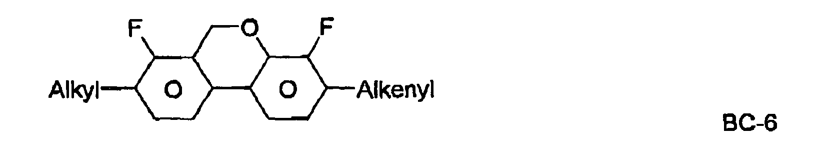 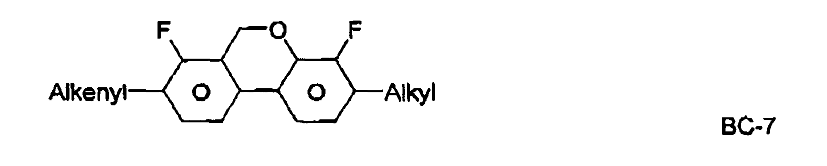 worin
- Alkyl und Alkyl*: jeweils unabhängig voneinander einen geradkettigen Alkylrest mit 1-6 C-Atomen, und
- Alkenyl und Alkenyl*: jeweils unabhängig voneinander einen geradkettigen Alkenylrest mit 2-6 C-Atomen,
bedeuten.
Ganz besonders bevorzugt sind Mischungen enthaltend eine, zwei oder drei Verbindungen der Formel BC-2.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium nach einem der Ansprüche 1 bis 11 enthält.

Das erfindungsgemäße flüssigkristalline Medium weist bevorzugt eine nematische Phase von ≤ 20 °C bis ≥ 70 °C, besonders bevorzugt von ≤ 30 °C bis ≥ 80 °C, ganz besonders bevorzugt von ≤ 40 °C bis 90 °C auf.

Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen,

Vorzugsweise weist die Flüssigkristallmischung einen nematischen Phasenbereich von mindestens 60 K und eine Fließviskosität V₂₀ von maximal 30 mm² · s⁻¹ bei 20 °C auf.

Die erfindungsgemäße Flüssigkristallmischung weist ein Δε von -0,5 bis -8,0, insbesondere von -3,0 bis -6,0 auf, wobei Δε die dielektrische Anisotropie bedeutet. Die Rotationsviskosität γ₁ ist vorzugsweise < 200 mPa·s, insbesondere < 170 mPa·s.

Die Werte der Doppelbrechung Δn in der Flüssigkristallmischung liegen in der Regel zwischen 0,07 und 0,16, vorzugsweise zwischen 0,08 und 0,12.

Die erfindungsgemäßen Flüssigkristallmedien haben eine negative dielektrische Anisotropie und weisen relativ hohe Werte des Betrags der dielektrischen Anisotropie (|Δε|) auf, die bevorzugt im Bereich von ≥ 2,7 bis ≥ 5,3 liegen.

Die erfindungsgemäßen Flüssigkristallmedien weisen relativ kleine Werte für die Schwellenspannung (V₀) auf. Vorzugsweise sind sie im Bereich von 1,7 V bis 2,5 V, besonders bevorzugt s 2,3 V und ganz besonders bevorzugt ≤ 2.2 V.

Außerdem weisen die erfindungsgemäßen Flüssigkristallmedien hohe Werte für die Voltage Holding Ratio in Flüssigkristallzellen auf. Diese sind in frisch gefüllten Zellen bei 20 °C in den Zellen ≥ 95 %, bevorzugt ≥ 97 %, und ganz besonders bevorzugt ≥ 99 % und nach 5 Minuten im Ofen bei 100 °C in den Zellen ≥ 90 %, bevorzugt ≥ 93 % und ganz besonders bevorzugt ≥ 98 %.

In der Regel weisen dabei Flüssigkristallmedien mit einer geringen Ansteuerspannung bzw. Schwellenspannung eine geringere Voltage Holding Ratio auf als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstanten der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Alle angegebenen Werte für Temperaturen für die vorliegende Erfindung sind in °C.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen wird auch, wie allgemein üblich, die optische Schwelle für 10 % relativen Kontrast (V₁₀) bestimmt und angegeben.

Die elektrooptischen Eigenschaften, z.B. die Schwellenspannung (V₀) (kapazitive Messung) und die optische Schwelle (V₁₀) werden, ebenso wie das Schaltverhalten, in bei der Merck KGaA hergestellten Testzellen bestimmt. Die Messzellen haben Substrate aus Natriumglas (Sodalime Glas) und sind in einer ECB- bzw. VA-Konfiguration mit Polyimidorientierungsschichten (SE-1211 mit Verdünner **26 (Mischungsverhältnis 1:1) beide der Firma Nissan Chemicals, Japan), die senkrecht zueinander gerieben sind, ausgeführt. Die Fläche der durchsichtigen, nahezu quadratischen Elektroden aus ITO beträgt 1 cm². Die Schichtdicke der verwendeten Testzellen wird entsprechend der Doppelbrechung der untersuchten Flüssigkristallmischung so ausgewählt, dass die optische Verzögerung (0,33 ± 0,01) µm beträgt. Die Polarisatoren, von denen sich jeweils einer vor bzw. hinter der Zelle befindet, bilden mit ihren Absorptionsachsen einen Winkel von 90° zueinander und sind mit diesen Achsen parallel zu der Reiberichtung an ihrem jeweils benachbarten Substrat. Die Schichtdicke beträgt meist ca. 4,0 µm. Die Zellen werden unter Normaldruck mittels Kapillarität gefüllt und unversiegelt untersucht. Die verwendeten Flüssigkristallmischungen sind, wenn nicht anders angegeben, nicht mit einem chiralen Dotierstoff versetzt, sie eignen sich aber auch besonders für Anwendungen, in denen eine solche Dotierung erforderlich ist.

Die elektrooptischen Eigenschaften und die Schaltzeiten der Testzellen werden in einem Meßgerät DMS 301 der Firma Autronic-Melchers, Karlsruhe, Deutschland, bei einer Temperatur von 20 °C bestimmt. Die verwendete Ansteuerwellenform ist eine Rechteckwelle mit einer Frequenz von 60 Hz. Die Spannung wird als Vᵣₘₛ (root mean square) angegeben. Bei der Messung der Schaltzeiten wird die Spannung von 0 V zum zweifachen Wert der optischen Schwelle (2V₁₀) erhöht und umgekehrt. Die angegebenen Schaltzeiten gelten für die gesamte Zeit, die von der Änderung der Spannung bis zum Erreichen von 90 % der jeweiligen gesamten Änderung der Lichtintensität vergeht, also τₒₙ ≡t(0 % bis > 90 %) und τ_{off} ≡t(100 % bis > 10 %), umfassen also auch die jeweiligen Totzeiten (delay times). Da die Einzelschaltzeiten von der Ansteuerspannung abhängen, werden zur Verbesserung der Vergleichbarkeit der Ergebnisse auch die Summe der beiden Einzelschaltzeiten (Σ = τₒₙ + τ_{off}) bzw. die mittlere Schaltzeit (τₐᵥ. = (τₒₙ + τ_{off})/2) angegeben.

Die Voltage Holding Ratio wird in den bei der Merck KGaA hergestellten Testzellen bestimmt. Die Messzellen haben Substrate aus Natriumglas (Sodalime Glas) und sind mit Polyimidorientierungsschichten (AL-3046 der Firma Japan Synthetic Rubber, Japan) mit einer Schichtdicke von 50 nm, die senkrecht zueinander gerieben sind ausgeführt. Die Schichtdicke beträgt einheitlich 6,0 µm. Die Fläche der durchsichtigen Elektroden aus ITO beträgt 1 cm².

Die erfindungsgemäßen Mischungen sind für alle VA-TFT-Anwendungen geeignet, wie z.B. VAN, MVA, (S)-PVA, ASV. Weiterhin sind sie für IPS (In plane switching)-, FFS (Fringe field switching)- und PALC-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt Verbindungen der Formeln 12, IIA, IIB und/oder III.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm²·s⁻¹, vorzugsweise nicht mehr als 25 mm²·s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm²·s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, und besonders bevorzugt < 10, Verbindungen der Formeln 12, IIA und/oder IIB und optional III.

Neben Verbindungen der Formeln 12, IIA und/oder IIB und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenyloyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor, oder -CN, und R⁹ und R¹⁰ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS-, FFS- oder PALC-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln I2 eine oder mehrere Verbindungen der nachfolgend genannten Verbindungen.

Folgende Abkürzungen werden verwendet:
(n, m, z: jeweils unabhängig voneinander 1, 2, 3, 4, 5 oder 6)

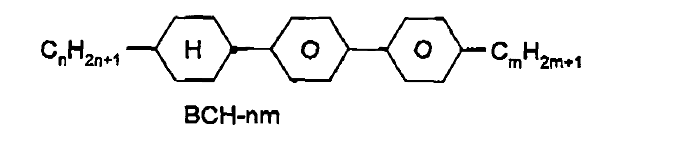

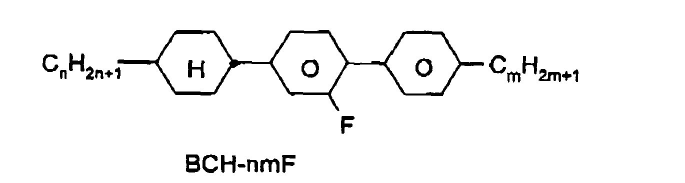

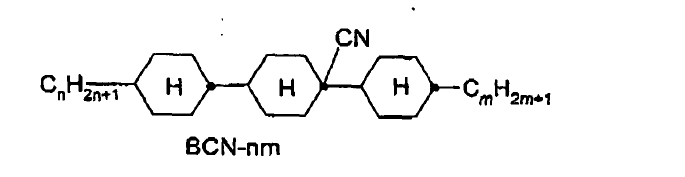

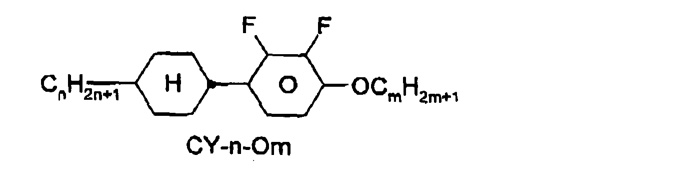

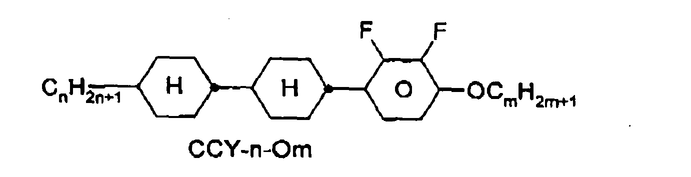

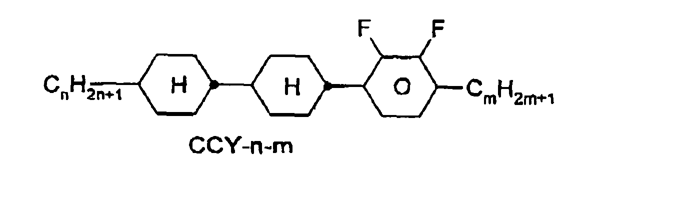

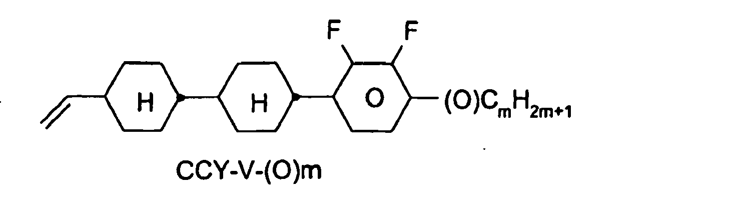

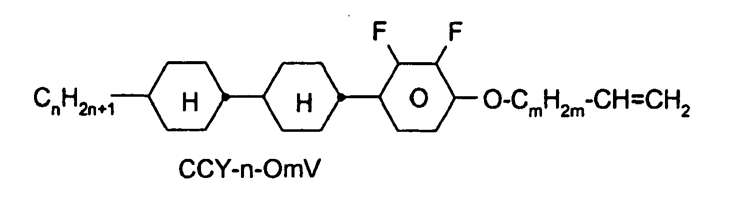

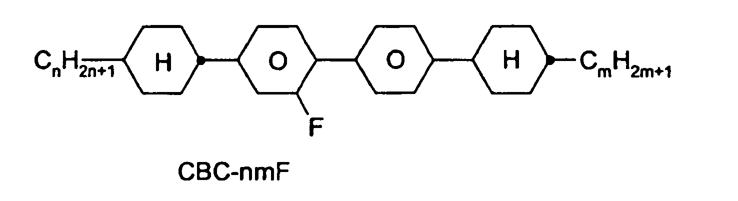

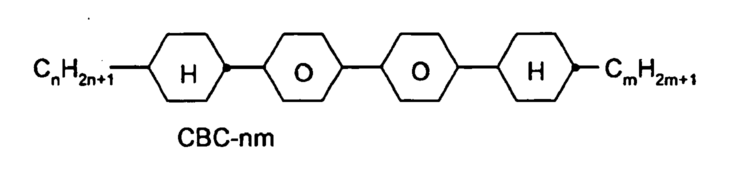

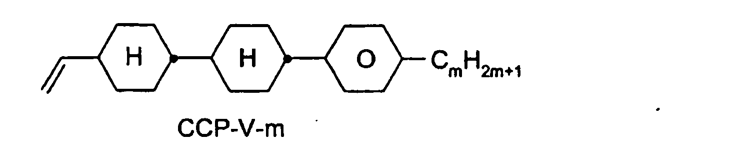

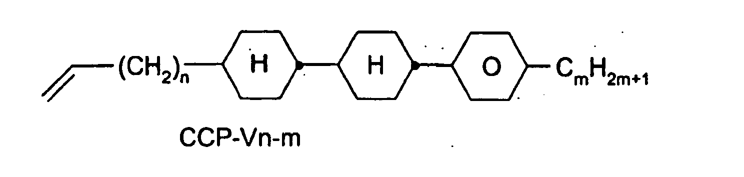

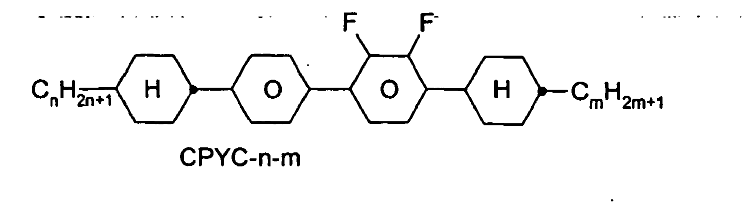

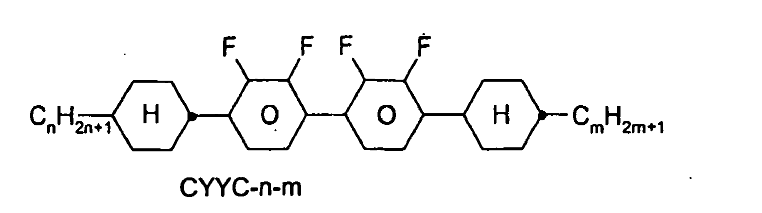

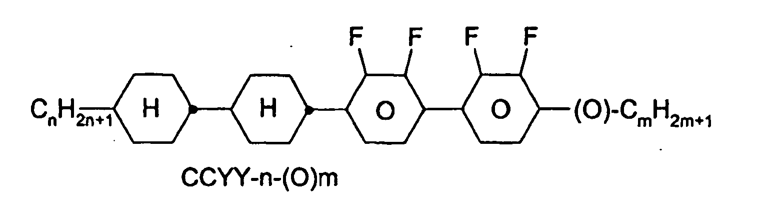

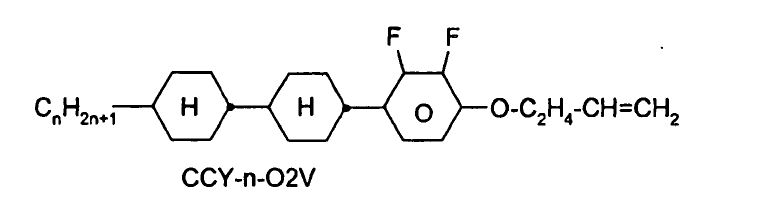

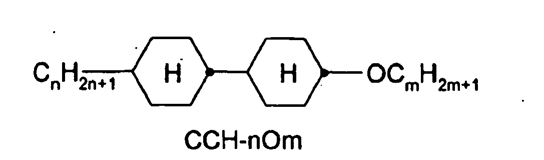

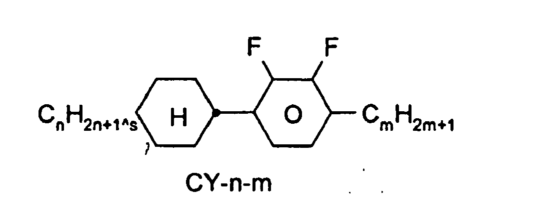

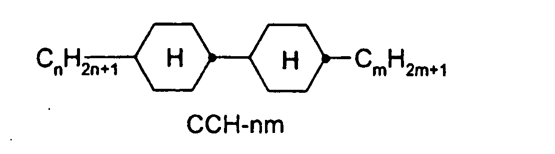

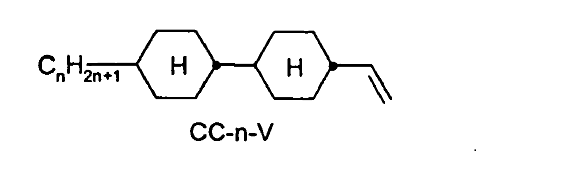

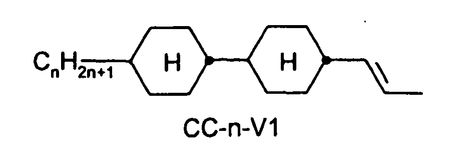

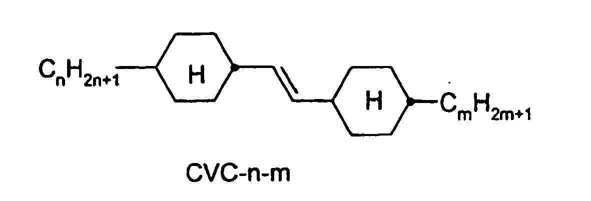

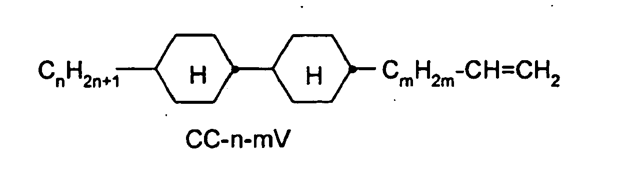

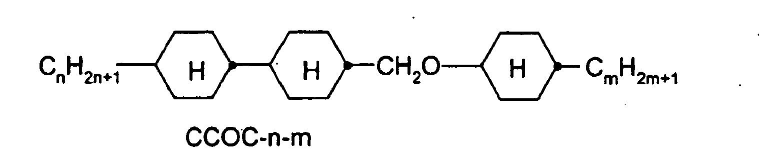

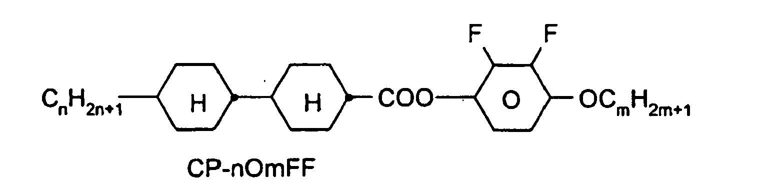

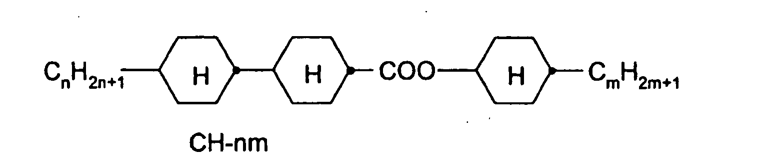

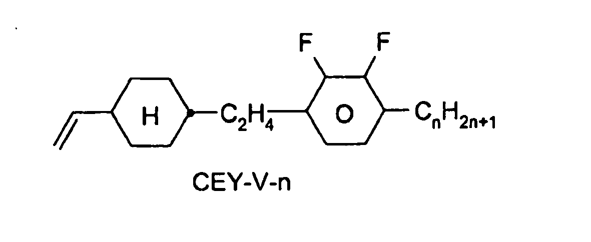

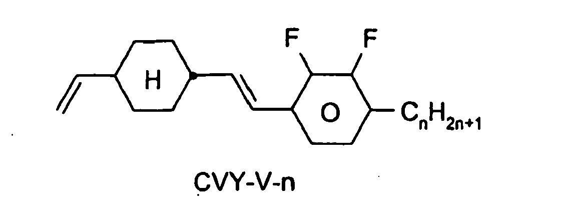

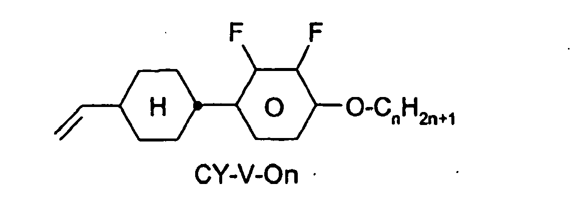

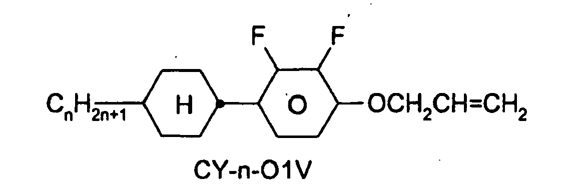

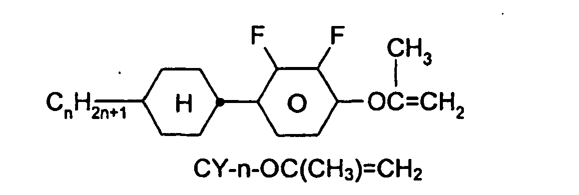

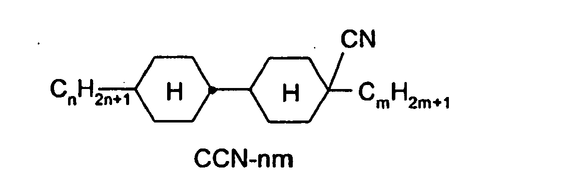

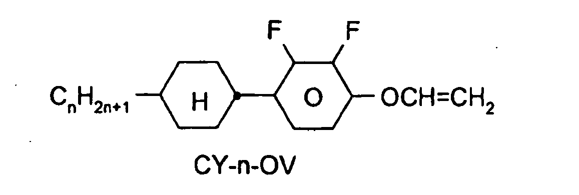

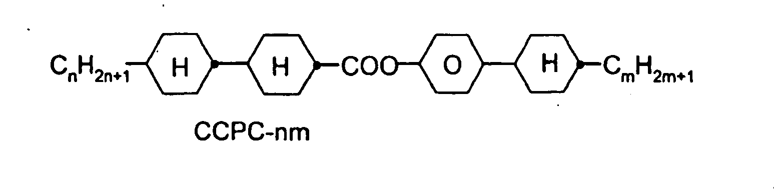

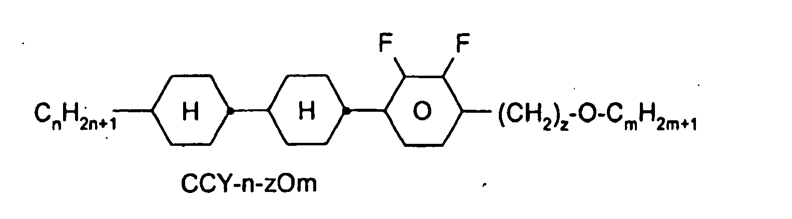

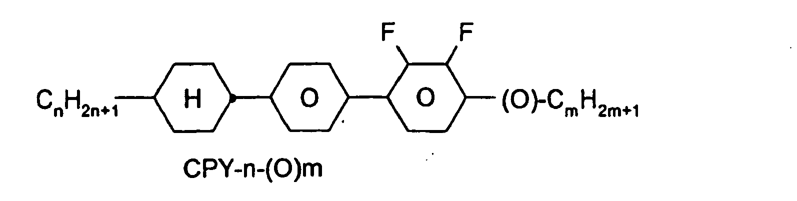

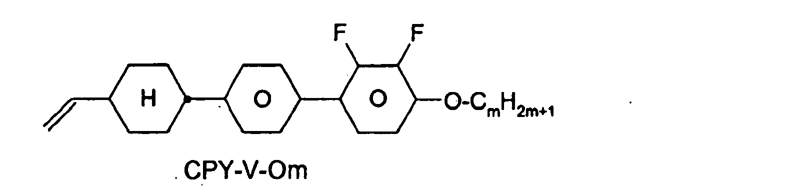

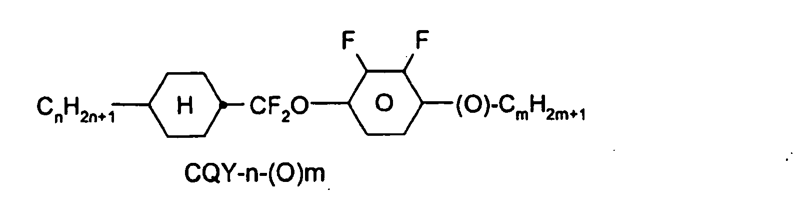

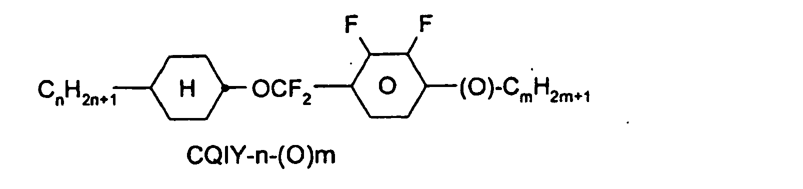

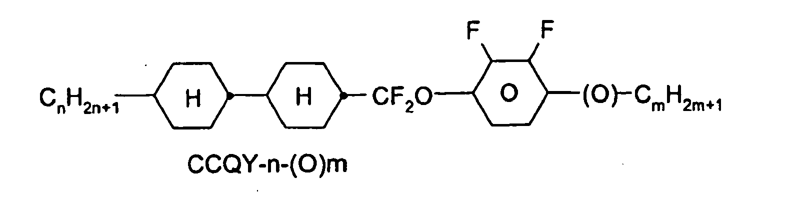

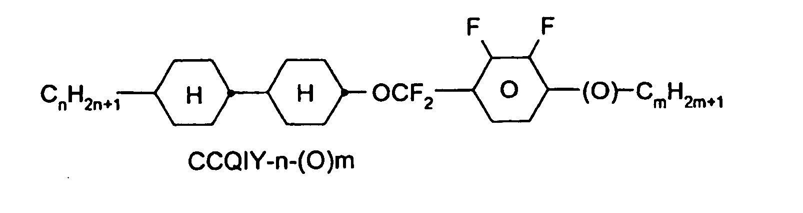

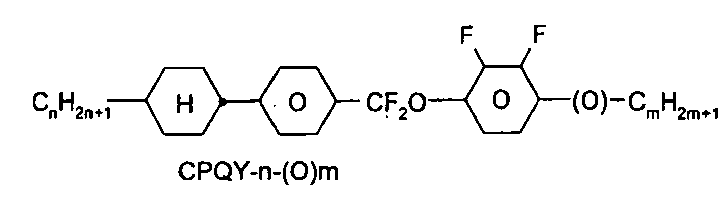

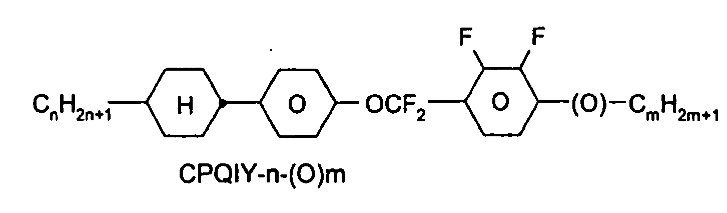

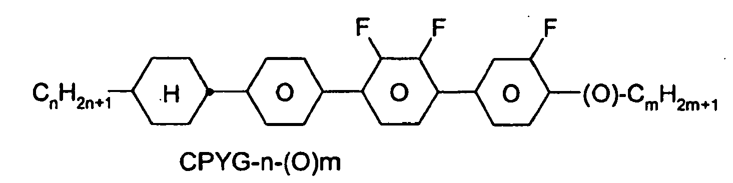

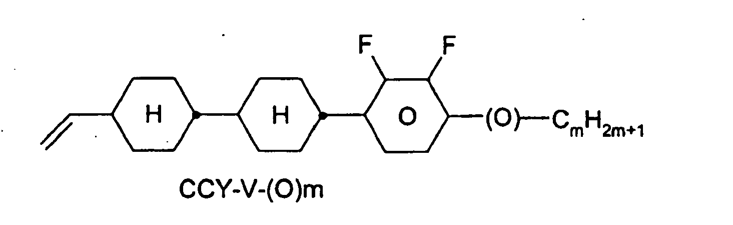

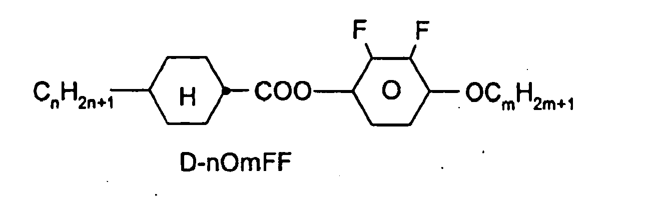

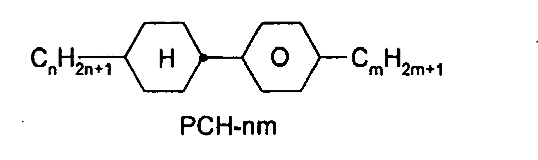

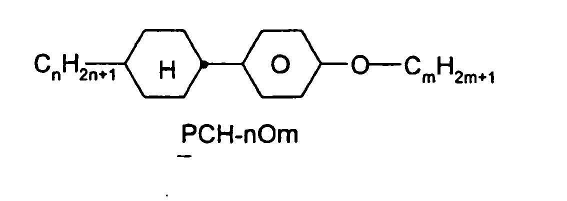

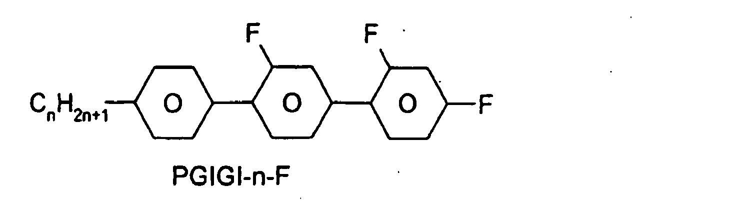

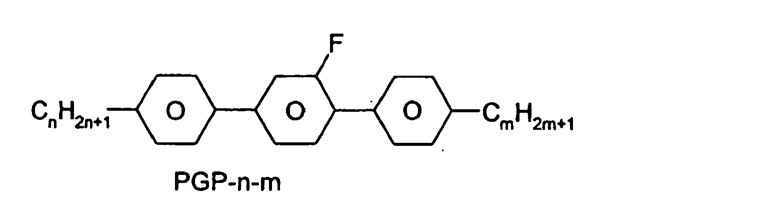

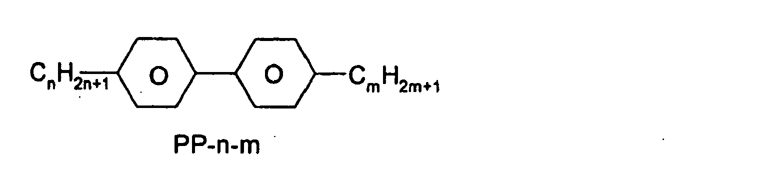

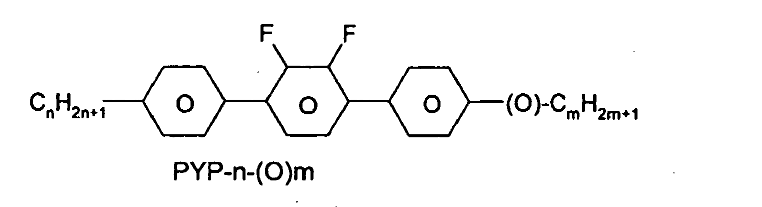

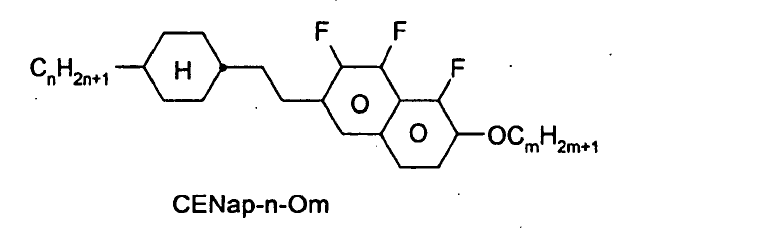

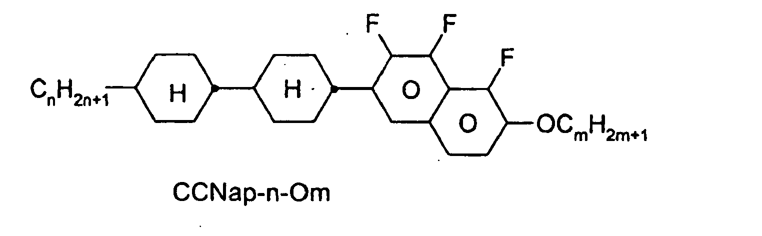

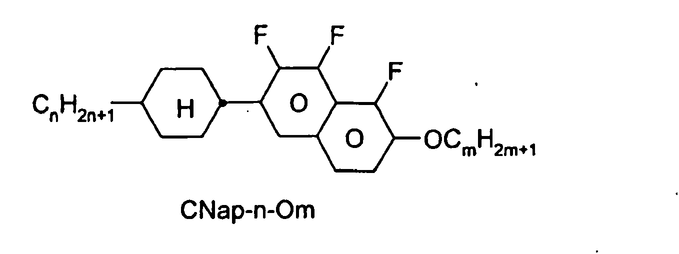

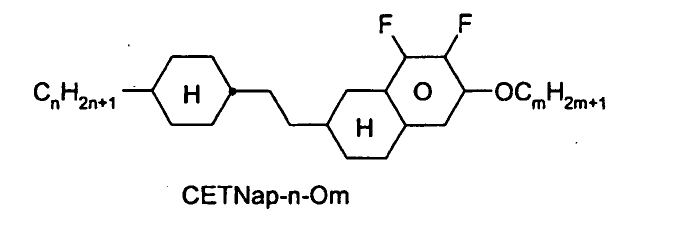

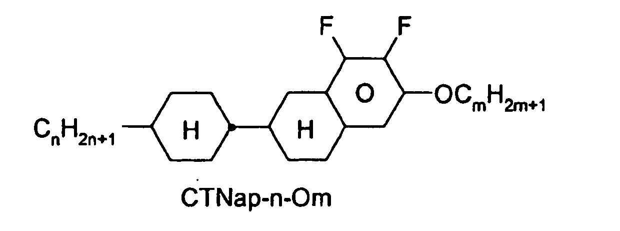

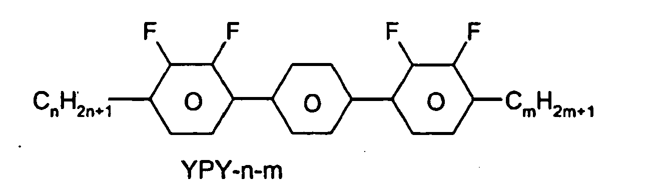

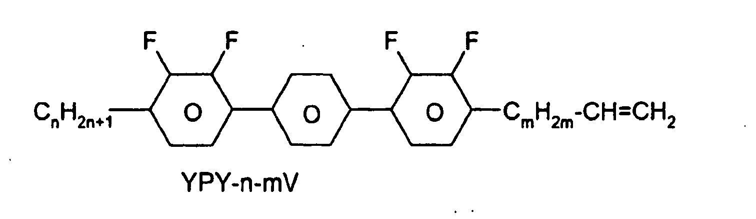

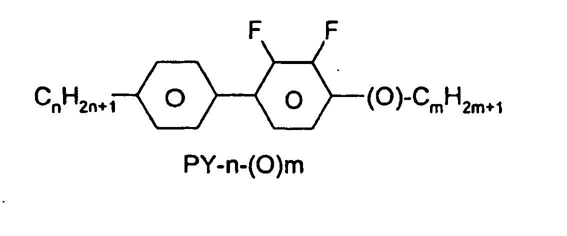

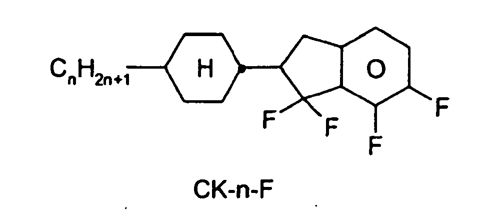

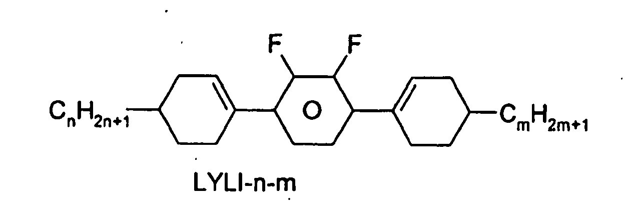

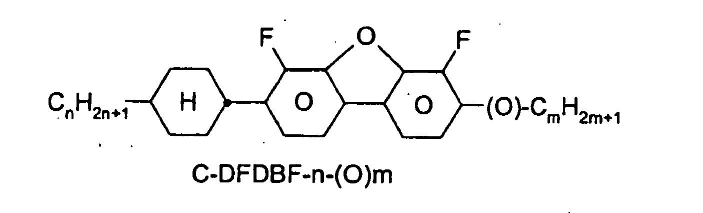

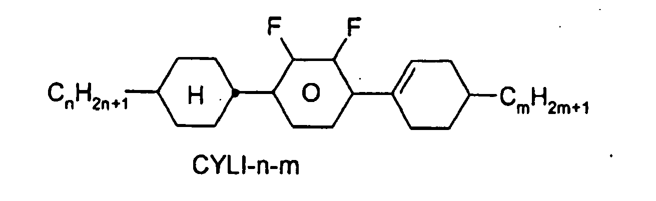

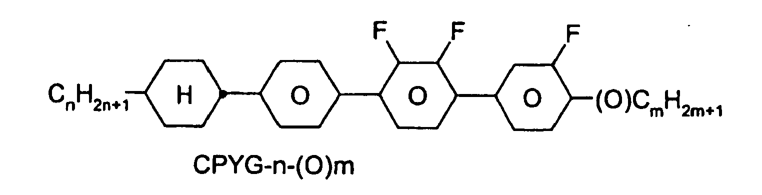

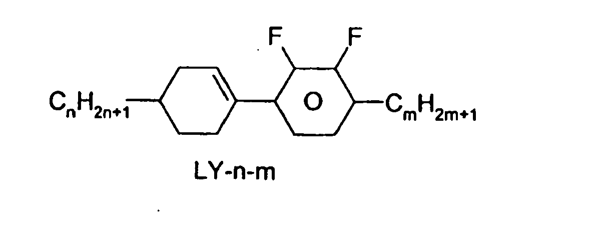

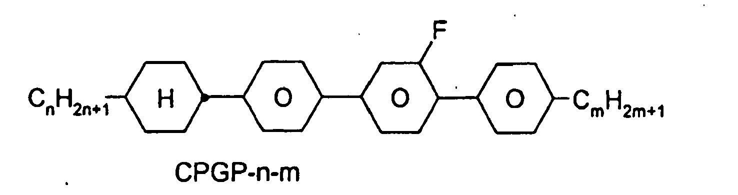

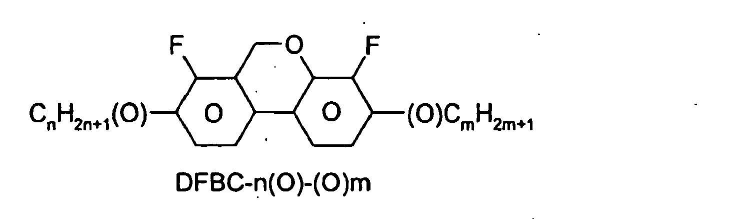

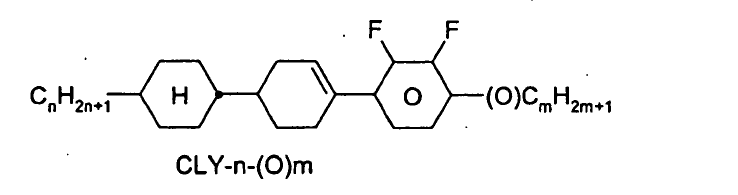

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

In der Tabelle A werden mögliche Dotierstoffe angegeben, die den erfindungsgemäßen Mischungen zugesetzt werden können. Sofern die Mischungen einen Dotierstoff enthalten, wird er in Mengen von 0,01-4 Gew.%, vorzugsweise 0,1-1,0 Gew.%, eingesetzt.

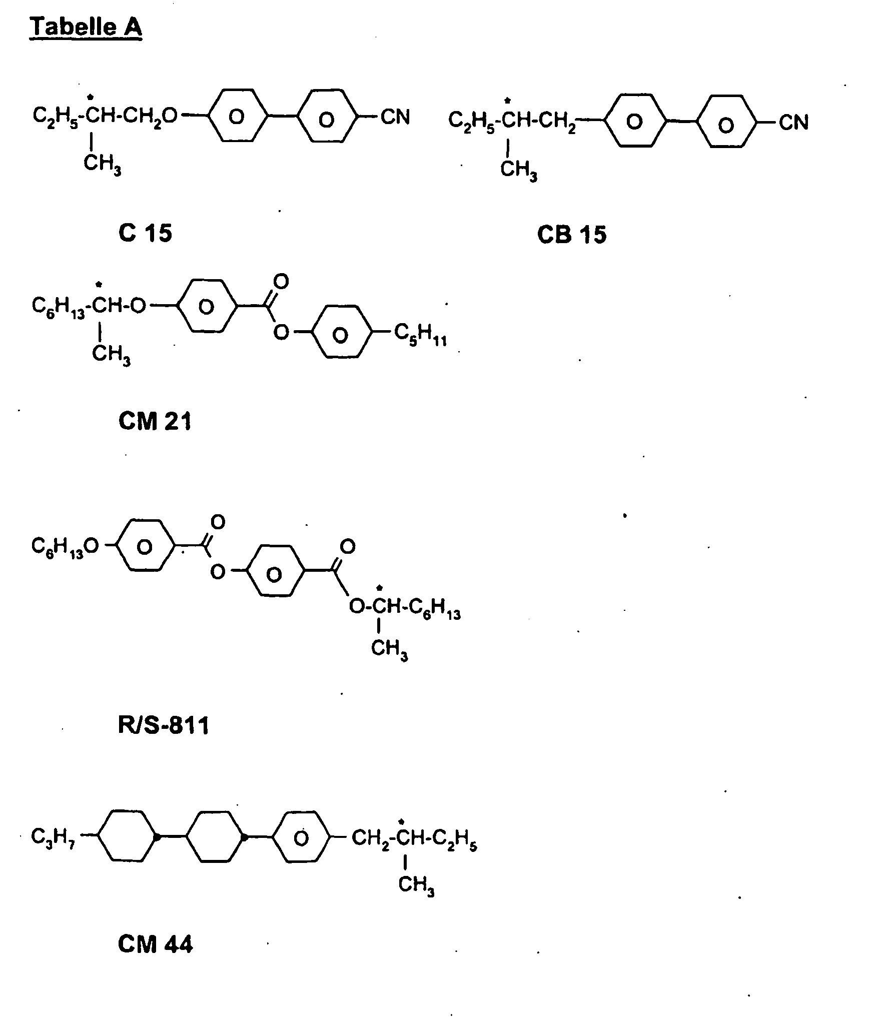

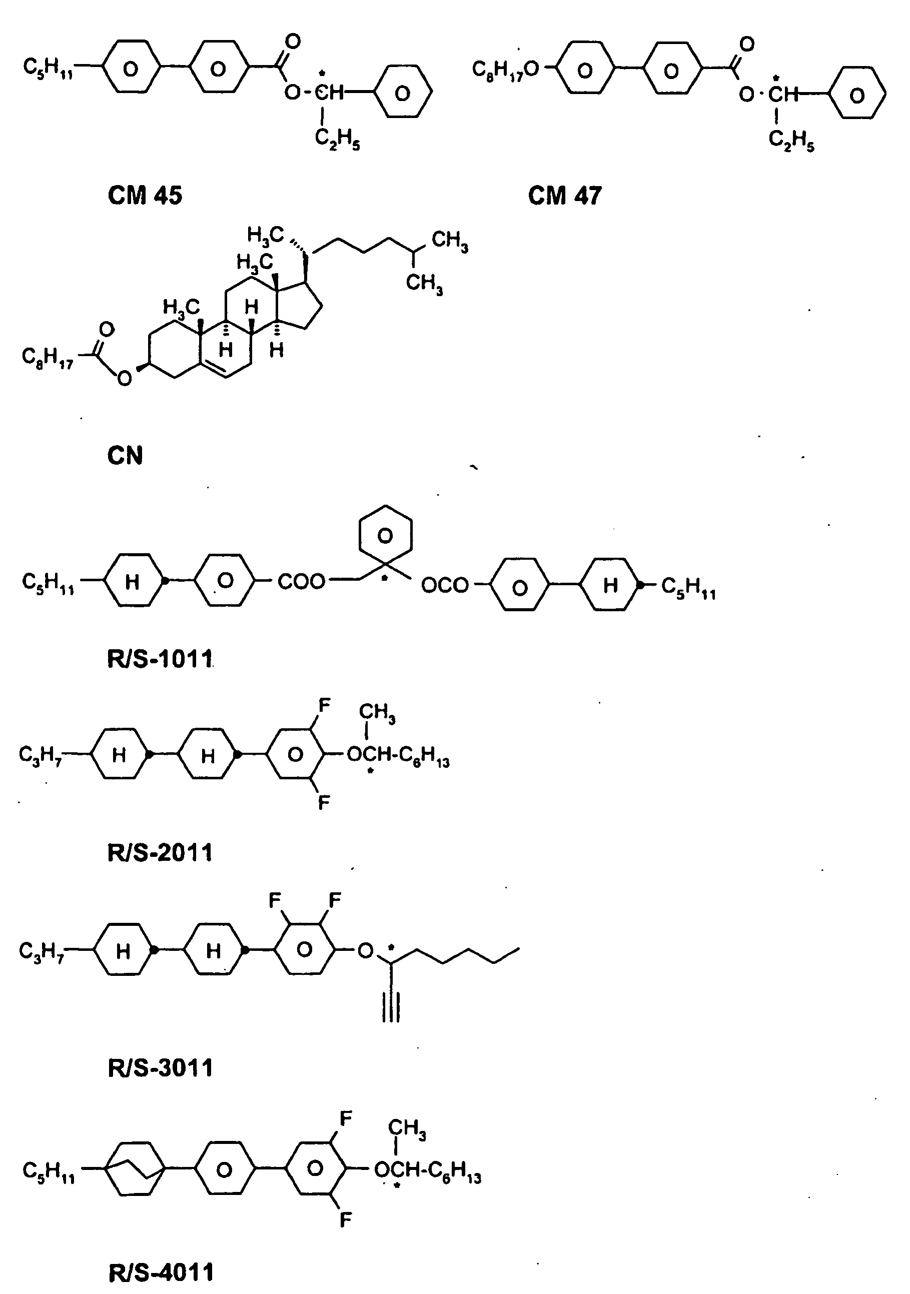

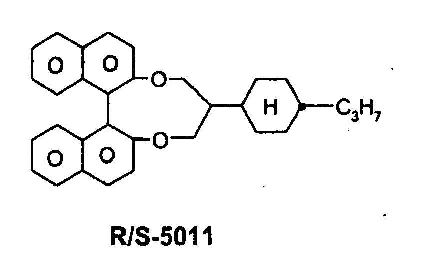

Stabilisatoren, die beispielsweise den erfindungsgemäßen Mischungen zugesetzt werden können, werden nachfolgend in Tabelle B genannt.

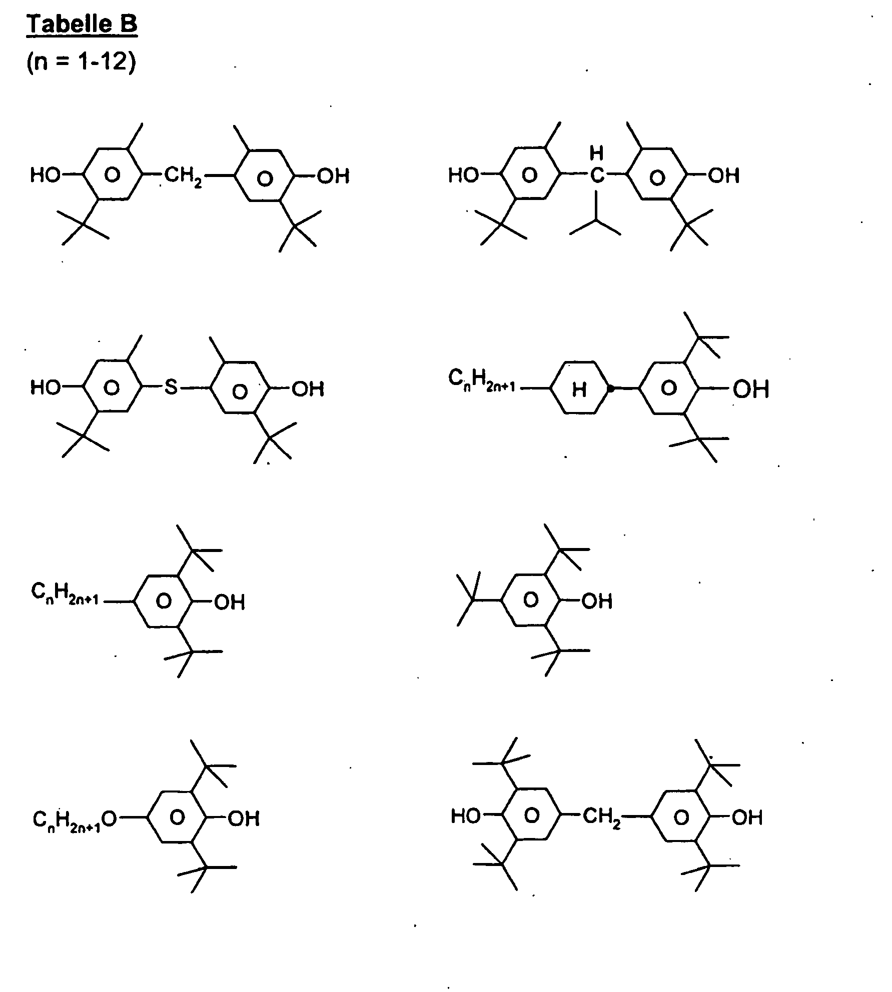

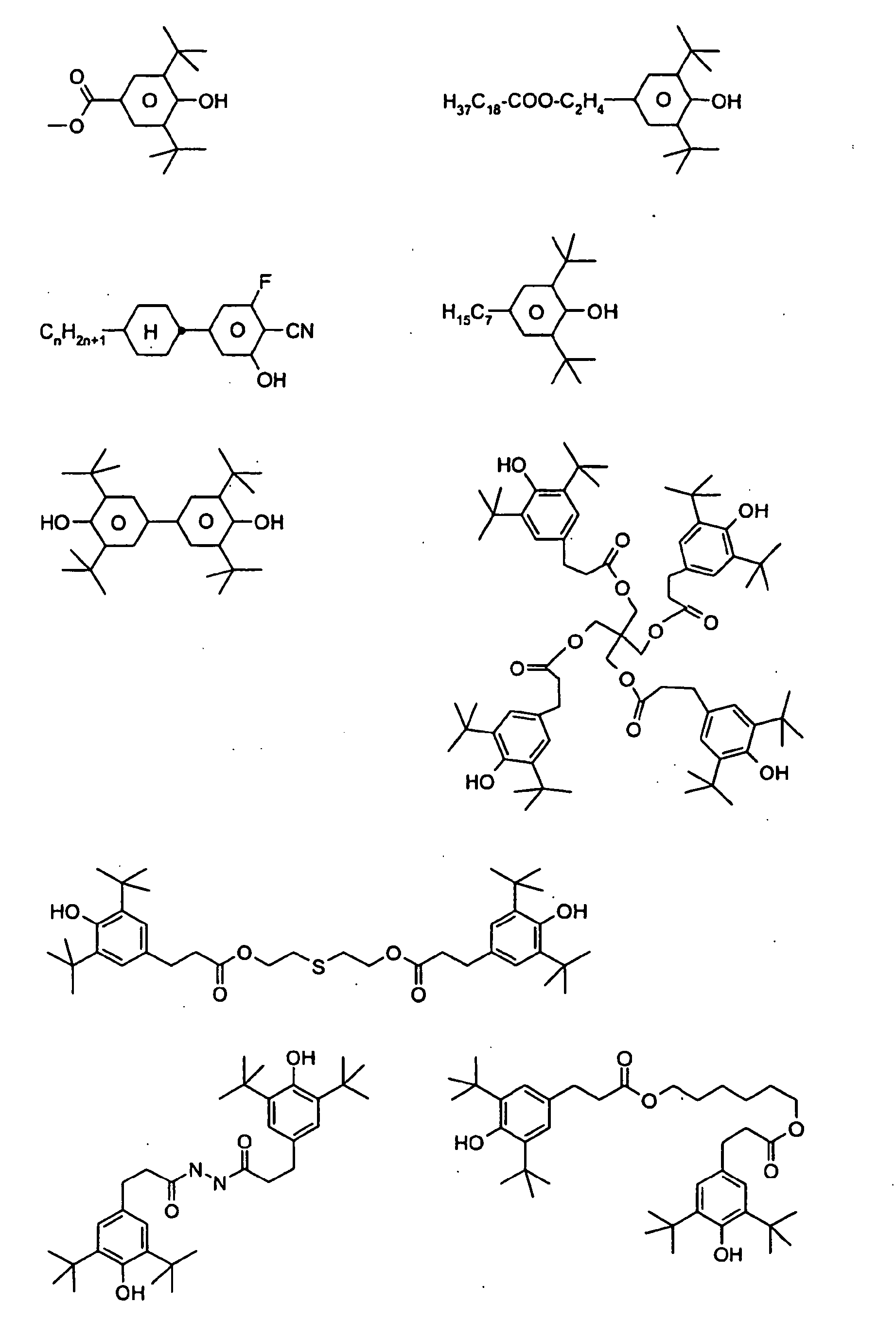

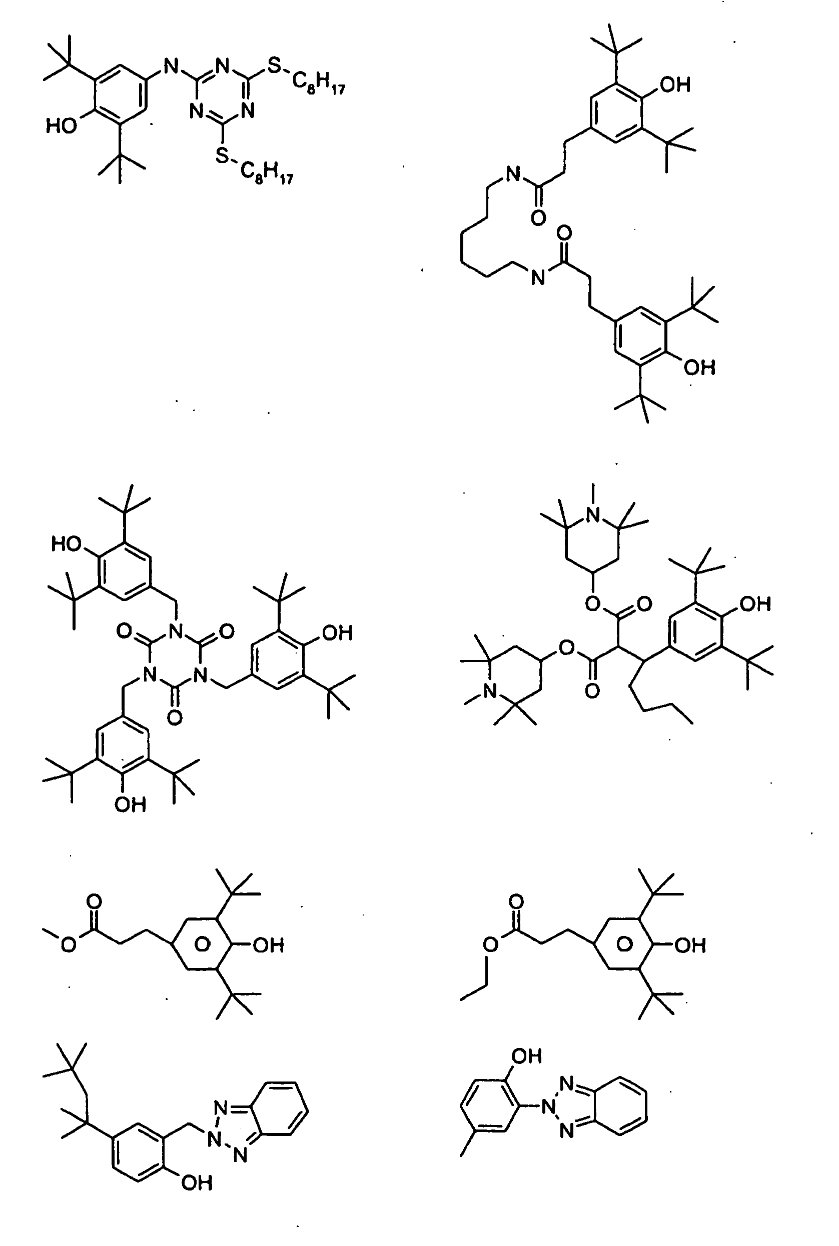

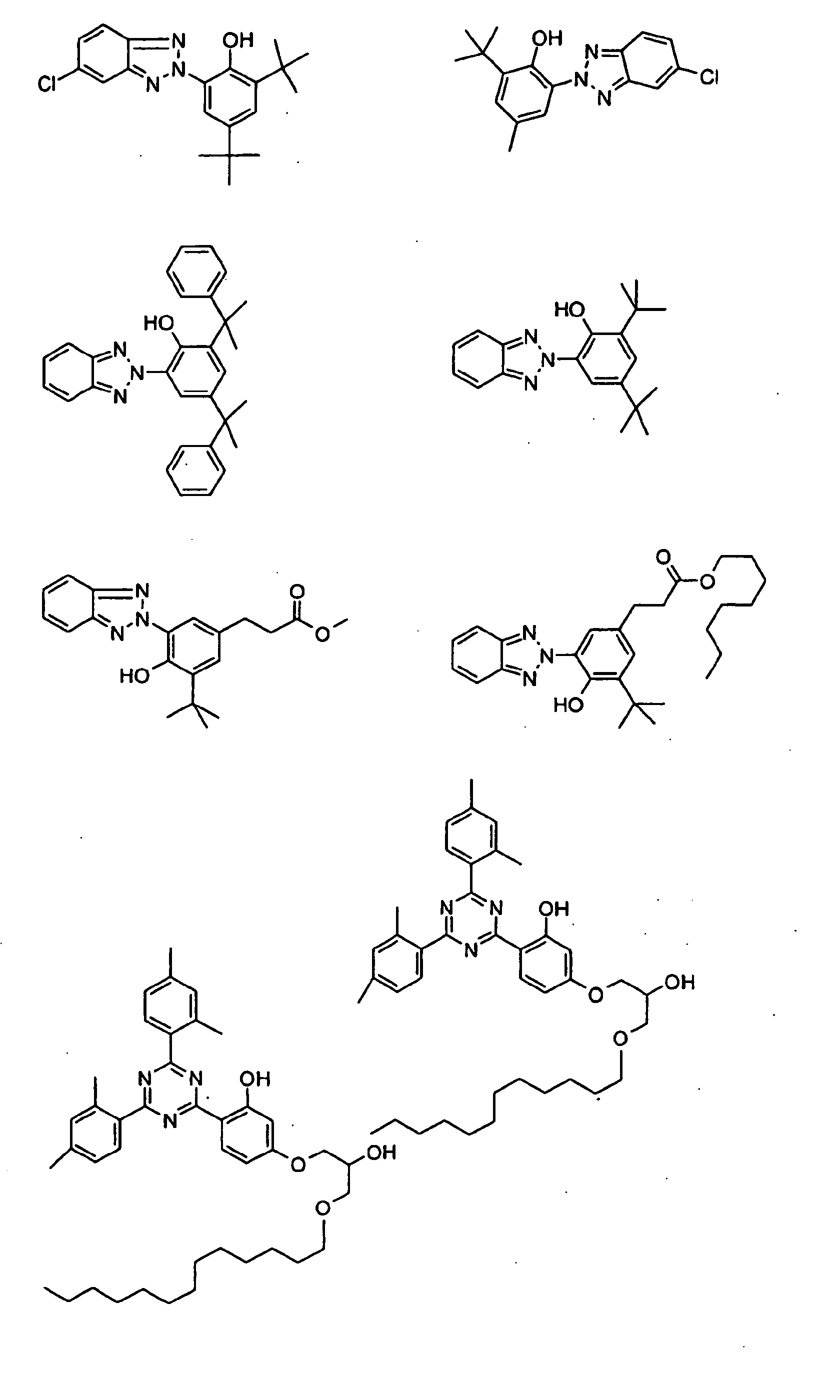

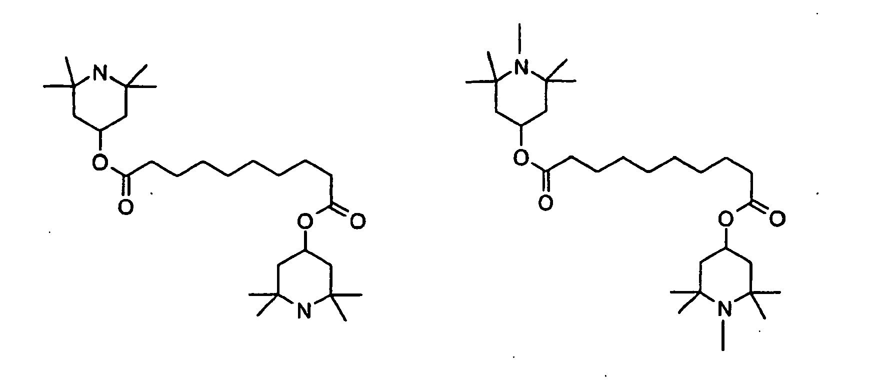

Die folgenden Beispiele sollen die Erfindung erläutern, ohne sie zu begrenzen. Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa·s], bestimmt nach dem Rotationsverfahren in einem magnetischen Feld
- LTS: Tieftemperaturstabilität [Low temperature stability (nematische Phase)], bestimmt in Testzellen

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homöotrope Orientierung der Flüssigkristalle bewirken.

### Mischungsbeispiele

### Beispiel 1

| | | | |
|---|---|---|---|
| CY-3-O2 | 20,00 % | Klärpunkt [°C]: | +78,0 |
| CCY-3-O2 | 8,00 % | Δn [589 nm, 20 °C]: | +0,0831 |
| CCY-3-O3 | 12,00 % | Δε [1 kHz, 20 °C]: | -3,5 |
| CCY-4-O2 | 11,00 % | K₁ [pN, 20 °C]: | 12,7 |
| CPY-2-O2 | 10,00 % | K₃ [pN, 20°C]: | 14,8 |
| CC-3-V | 39,00 % | V₀ [V. 20 °C]: | 2,16 |
| | | γ₁ [mPa·s, 20 °C]: | 96 |
| | | LTS Zellen [-20 °C]: | > 1000 h |
| | | LTS Zellen [-30 °C]: | > 1000 h |

### Beispiel 2

| | | | |
|---|---|---|---|
| CY-3-O2 | 20,00 % | Klärpunkt [°C]: | +80,0 |
| CY-5-O2 | 4,00 % | Δn [589 nm, 20 °C]: | +0,0839 |
| CCY-3-O2 | 11,00 % | Δε [1 kHz, 20 °C]: | -3,6 |
| CCY-3-O3 | 13,00 % | K₁ [pN, 20 °C]: | 12,9 |
| CCY-4-O2 | 9,00 % | K₃ [pN, 20 °C]: | 15,6 |
| CC-3-V | 38,00 % | V₀[V, 20 °C]: | 2,21 |
| CPYG-2-O2 | 5,00 % | γ₁ [mPa·s, 20 °C]: | 102 |
| | | LTS Zellen [-20 °C]: | > 1000 h |

### Beispiel 3

| | | | |
|---|---|---|---|
| CY-3-O2 | 3,00 % | Klärpunkt [°C]: | +83,5 |
| CCY-3-O2 | 12,00 % | Δn [589 nm, 20 °C]: | +0,0805 |
| CCY-4-O2 | 12,00 % | Δε [1 kHz, 20 °C]: | -3,9 |
| CPY-3-O2 | 10,00 % | K₁ [pN, 20 °C]: | 13,7 |
| CC-3-V | 42,00 % | K₃ [pN. 20°C]: | 16,5 |
| CK-3-F | 7,00 % | V₀ [V, 20 °C]: | 2,16 |
| CK-5-F | 7,00% | γ₁ [mPa·s, 20 °C]: | 96 |
| CK-4-F | 7,00 % | | |

### Beispiel 4

| | | | |
|---|---|---|---|
| CY-3-O2 | 16,00 % | Klärpunkt [°C]: | +77,0 |
| CCY-3-O2 | 11,00 % | Δn [589 nm, 20 °C]: | +0,1064 |
| CCY-3-O3 | 6,00 % | Δε [1 kHz, 20 °C]: | -3,0 |
| CPY-2-O2 | 7,00 % | K₁ [pN, 20 °C]: | 12,8 |
| CPY-3-O2 | 7,00 % | K₃ [pN, 20 °C]: | 14,6 |
| PYP-2-3 | 14,00 % | V₀ [V, 20 °C]: | 2,34 |
| CC-3-V | 39,00 % | γ₁ [mPa·s, 20 °C]: | 89 |

### Beispiel 5

| | | |
|---|---|---|
| CC-3-V | 30, 00 % Klärpunkt [°C]: | +89,0 |
| CCP-V-1 | 10,00 % Δn [589 nm, 20 °C]: | +0,1431 |
| CY-5-O2 | 4,00% Δε [1 kHz, 20 °C]: | -3,4 |
| CPY-3-O2 | 10,00 % γ₁ [mPa·s, 20 °C]: | 143 |
| CPY-2-O2 | 10,00 % | |
| PYP-2-3 | 12,00 % | |
| PYP-2-4 | 12,00 % | |
| 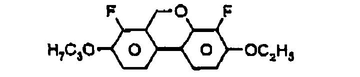 | 8, 00 % | |
| 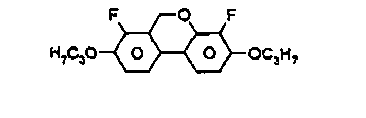 | 4,00 % | |

### Beispiele 6

| | | | |
|---|---|---|---|
| CC-3-V | 35,00 % | Klärpunkt [°C]: | +76,0 |
| CC-4-V | 20,00 % | Δn [589 nm, 20 °C]: | +0,0944 |
| CCY-3-O3 | 10,00 % | Δε [1 kHz, 20 °C]: | -3,3 |
| CPY-3-O2 | 10,00 % | γ₁ [mPa·s, 20 °C]: | 80 |
| CPY-2-O2 | 14,00 % | | |
| 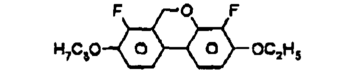 | 9,00 % | | |
| 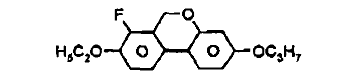 | 3,00% | | |
| 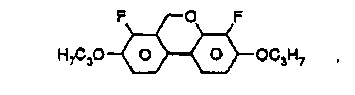 | 3,00% | | |

### Beispiel 7

| | | |
|---|---|---|
| CC-3-V | 35,00 % Klärpunkt [°C]: | +71,0 |
| CC-4-V | 10,00 % Δn [589 nm, 20 °C]: | +0,0820 |
| CCP-V-1 | 13,00 % Δε [1 kHz, 20 °C]: | -3,6 |
| CK-3-F | 5,00% γ₁ [mPa·s, 20 °C]: | 78 |
| CK-4-F | 7,00% | |
| CK-5-F | 5,00% | |
| CCY-3-O3 | 10,00 % | |
| 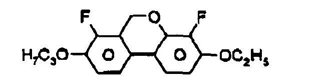 | 9,00% | |
| 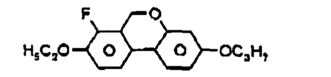 | 3,00 % | |
| 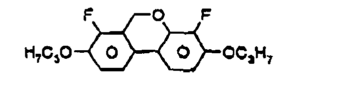 | 3,00% | |

## Patentansprüche

1. Flüssigkristallines Medium mit negativer dielektrischer Anisotropie auf der Basis eines Gemisches von polaren Verbindungen, **dadurch gekennzeichnet, dass** es eine Verbindung der Formel 12, 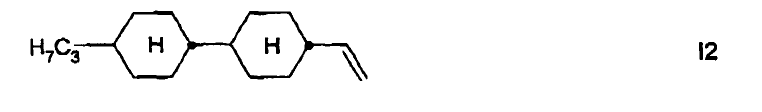 in Mengen von 30-60 Gew.% bezogen auf das Medium,
enthält,
und zusätzlich eine oder mehrere Verbindungen der Formeln IIA und/oder IIB enthält, 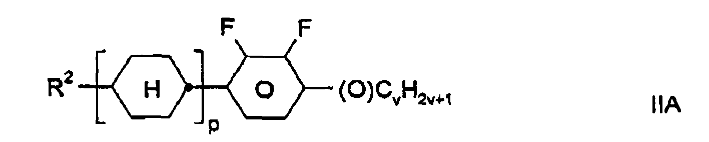 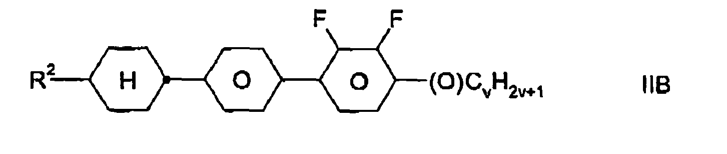 worin
R² einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 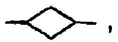 -C≡C-, -CO-
-CO-O-, -O-CO- oder -O-CO-O- so ersetzt sein können, dass O-Atome nicht direkt miteinander verknüpft sind,
p 1 oder 2, und
v 1 bis 6
bedeuten.

2. Flüssigkristallines Medium nach Anspruch 1, **dadurch gekennzeichnet, dass** es eine Verbindung der Formel 12, 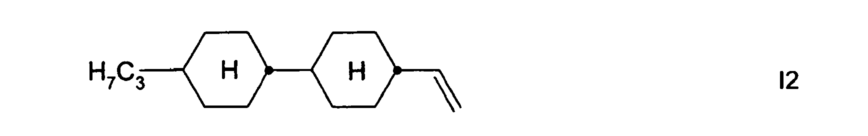 und ein Verbindung der Formel 13 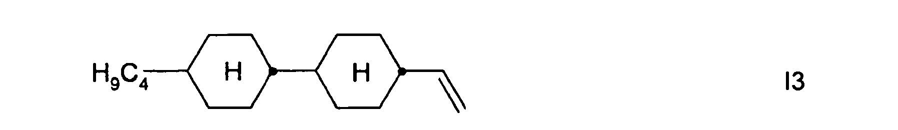 enthält,
wobei die Gesamtkonzentration der beiden Verbindungen I2 und I3 in der Mischung ≥ 40 Gew.% beträgt.

3. Flüssigkristallines Medium nach Anspruch 1 oder 2, **dadurch gekennzeichnet, dass** es zusätzlich eine oder mehrere Verbindungen der Formel III, 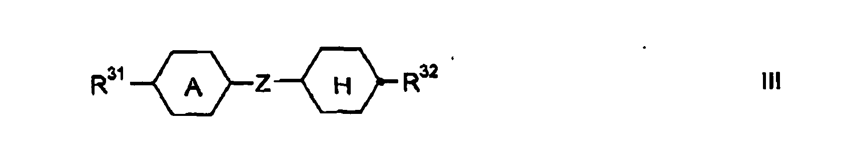 worin
R³¹ und R³² jeweils unabhängig voneinander einen geradkettigen Alkyl-, Alkoxyalkyl- oder Alkoxyrest mit bis zu 12 C-Atomen, und 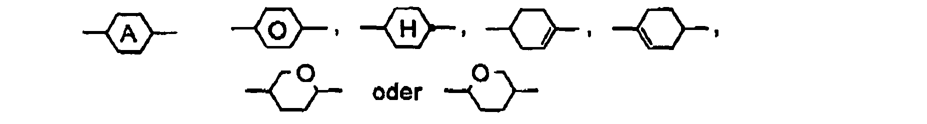
Z Einfachbindung, -CH₂CH₂-, -CH=CH-, -CF₂O-, -OCF₂-, -CH₂O-, -OCH₂-, -COO-, -OCO-, -C₂F₄-, -CF=CF-
bedeuten,
enthält.

4. Flüssigkristallines Medium nach einem oder mehreren der Ansprüche 1 bis 3, **dadurch gekennzeichnet, dass** es eine oder mehrere Verbindungen ausgewählt aus den Formeln IIIa bis IIIh enthält: 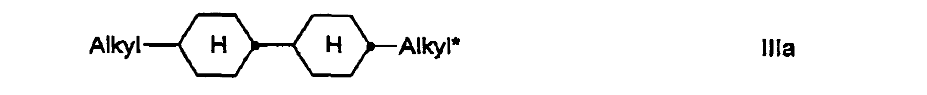 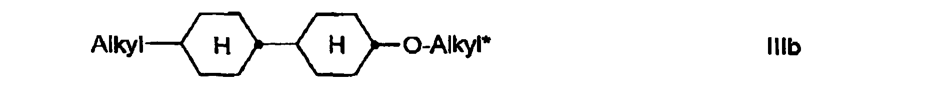 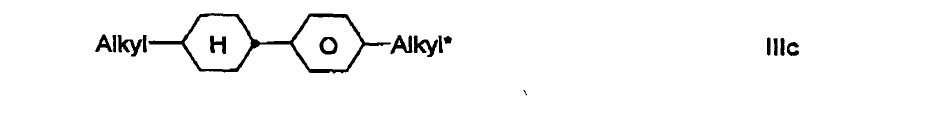 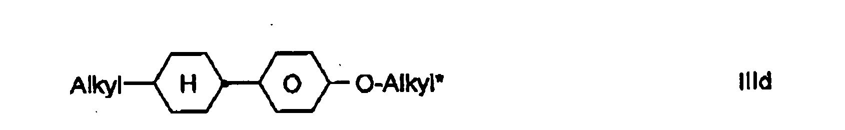 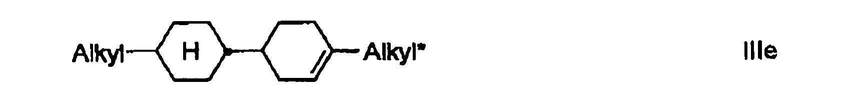 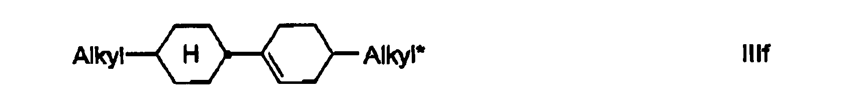 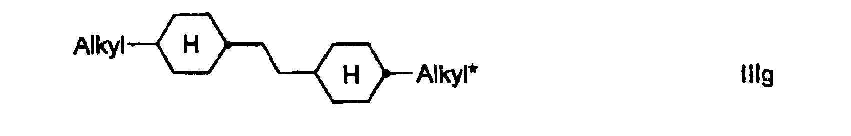 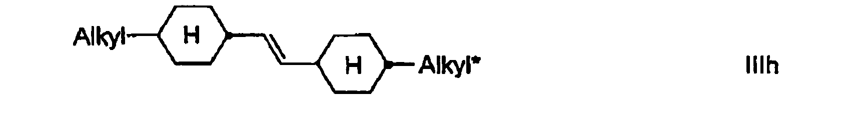 worin
Alkyl und Alkyl* jeweils unabhängig voneinander einen geradkettigen Alkylrest mit 1-6 C-Atomen, und
bedeuten.

5. Flüssigkristallines Medium nach einem oder mehreren der Ansprüche 1 bis 4, **dadurch gekennzeichnet, dass** der Anteil der Verbindung der Formel 12 im Gesamtgemisch mindestens 35 Gew.% beträgt

6. Flüssigkristallines Medium nach einem oder mehreren der Ansprüche 1 bis 5, **dadurch gekennzeichnet, dass** der Anteil an Verbindungen der Formeln IIA und/oder IIB im Gesamtgemisch mindestens 20 Gew.% beträgt.

7. Flüssigkristallines Medium nach einem oder mehreren der Ansprüche 1 bis 6, **dadurch gekennzeichnet, dass** der Anteil an Verbindungen der Formel III im Gesamtgemisch mindestens 3 Gew.% beträgt.

8. Flüssigkristallines Medium nach einem oder mehreren der Ansprüche 1 bis 7, **dadurch gekennzeichnet, dass** es mindestens eine Verbindung ausgewählt aus den Formeln 11 und 13 bis 19, 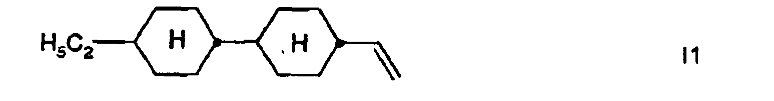 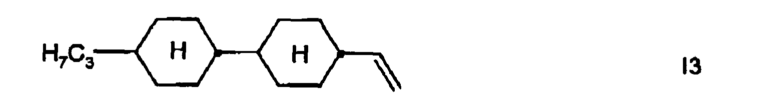 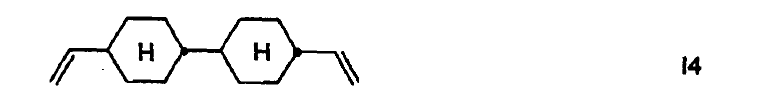 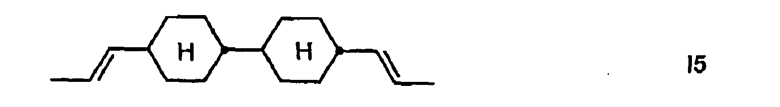 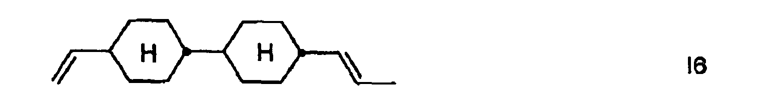 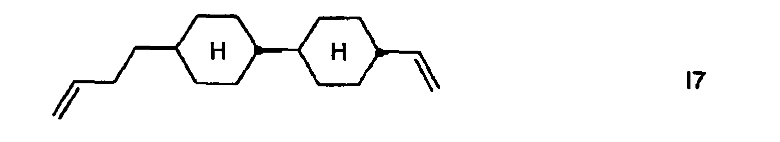 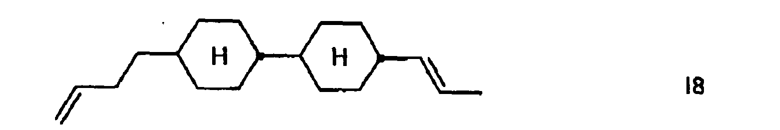 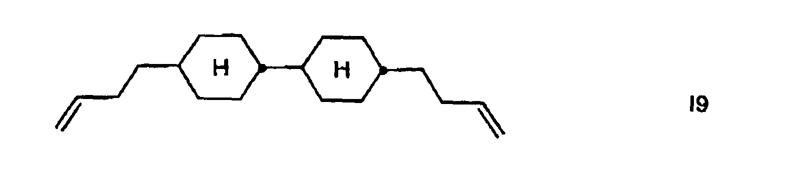 enthält

9. Flüssigkristallines Medium nach einem oder mehreren der Ansprüche 1 bis 8, **dadurch gekennzeichnet, dass** es zusätzlich eine oder mehrere fluorierte Terphenyle der Formeln T-1 bis T-22, 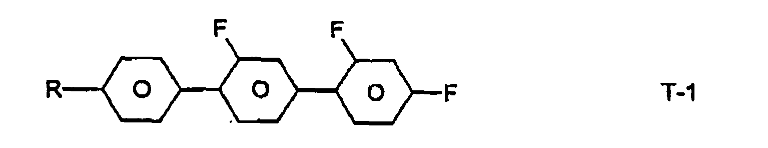 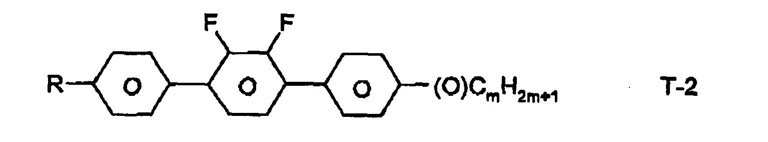 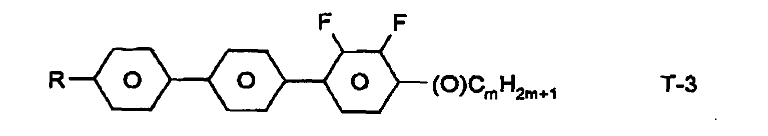 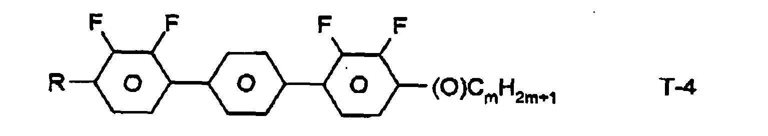 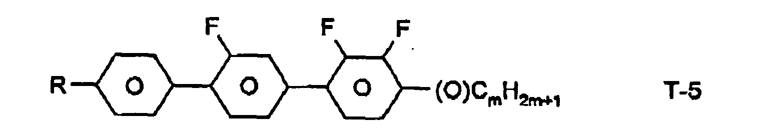 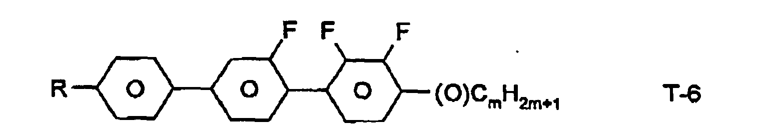 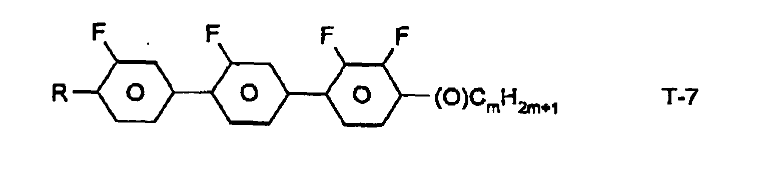 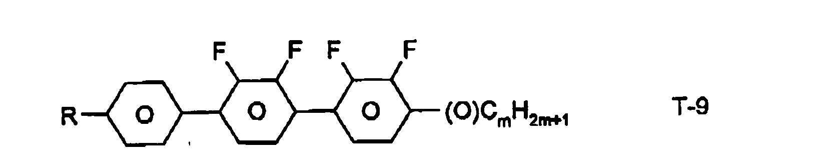 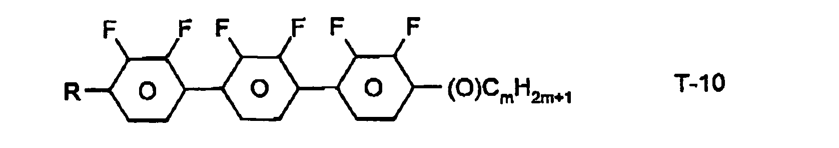 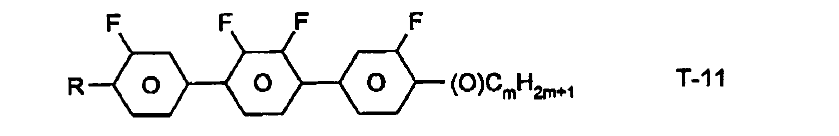 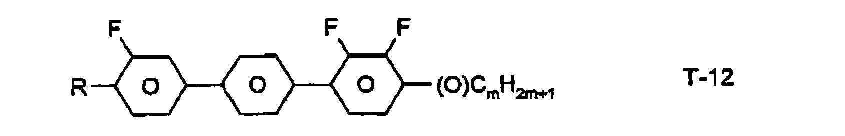 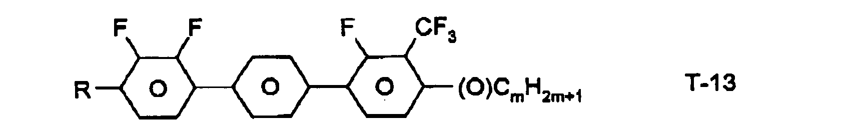 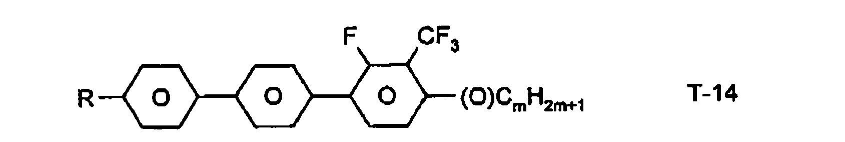 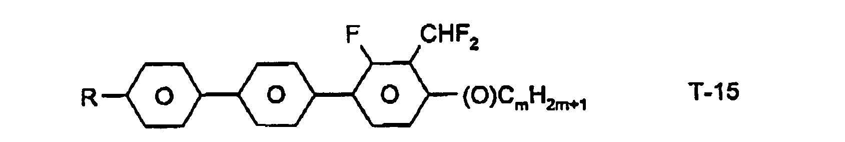 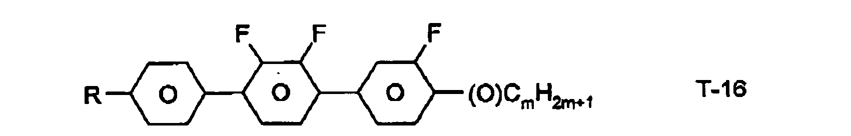 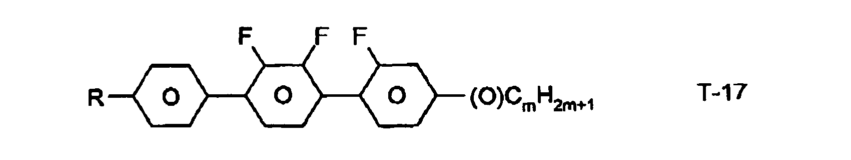 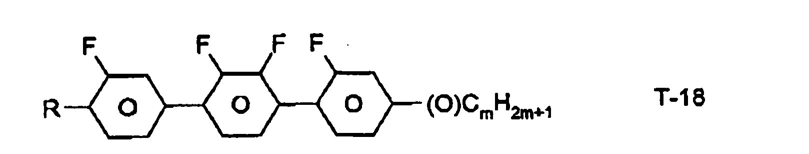 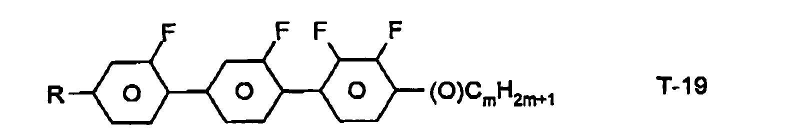 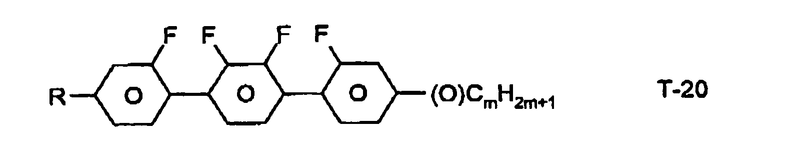 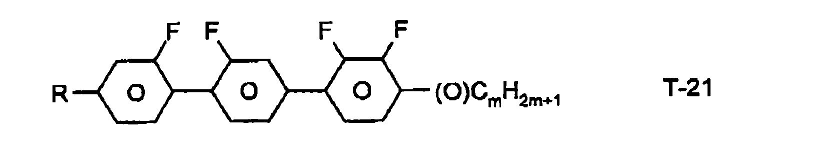 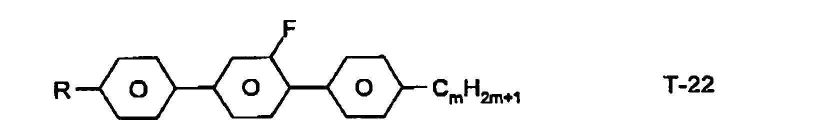 worin
R die für R² in Anspruch 1 angegebene Bedeutung hat,
enthält.

10. Flüssigkristallines Medium nach einem oder mehreren der Ansprüche 1 bis 9, **dadurch gekennzeichnet, dass** es zusätzlich eine oder mehrere Verbindungen der Formeln 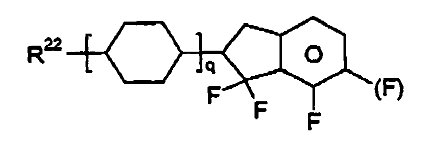 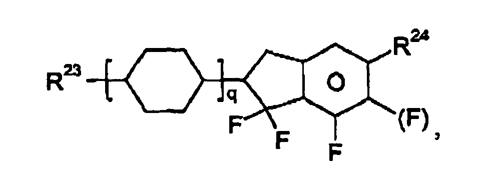 wobei
R²²⁻²³ jeweils unabhängig voneinander einen unsubstituierten, einen einfach durch CN oder CF₃ oder mindestens einfach durch Halogen substituierten Alkyl- oder Alkenylrest mit bis zu 4 C-Atomen, wobei in diesen Resten auch eine oder mehrere CH₂-Gruppen durch -O-, -S-, 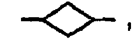 -C≡C-, -CF₂O-, -OCF₂-, -OC-O- oder -O-CO- so ersetzt sein können, dass O-Atome nicht direkt miteinander verknüpft sind, bedeuten, und
R²⁴ CH₃, C₂H₅ oder n-C₃H₇ und q 1 oder 2 bedeuten,
enthält.

11. Flüssigkristallines Medium nach einem oder mehreren der Ansprüche 1 bis 10, **dadurch gekennzeichnet, dass** es mindestens eine Verbindung der Formeln O-1 bis O-12, 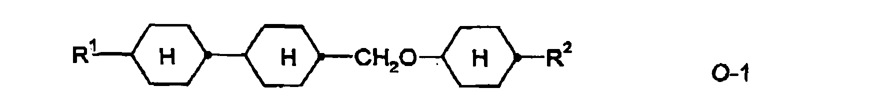 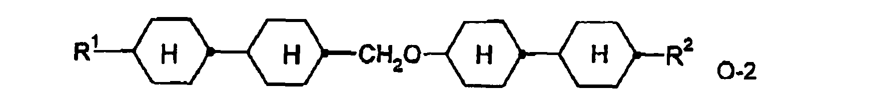 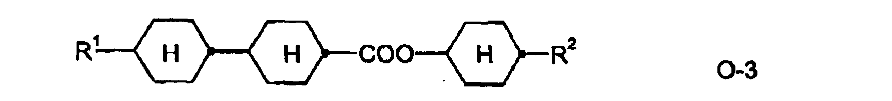 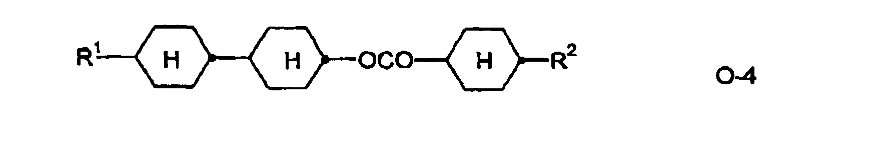 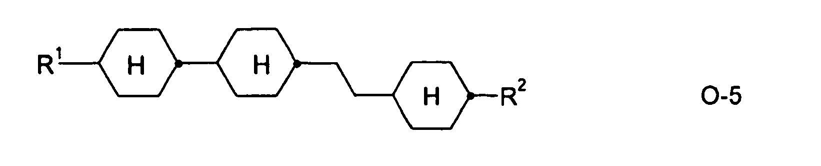 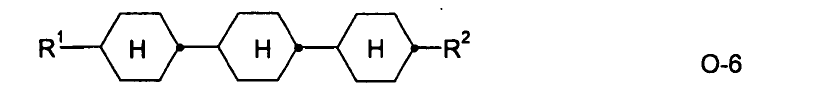 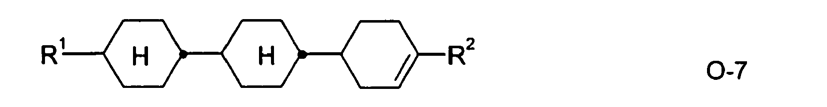 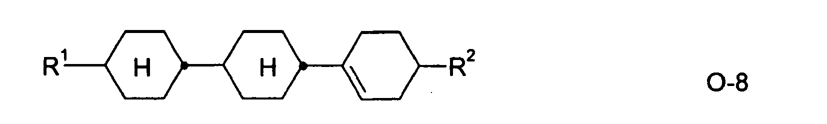 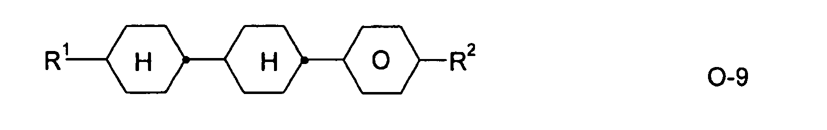 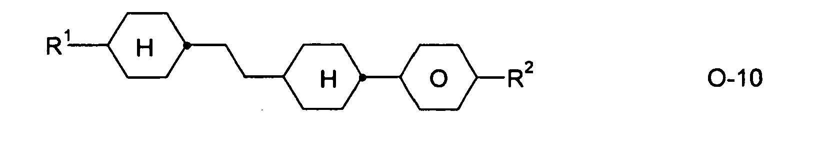 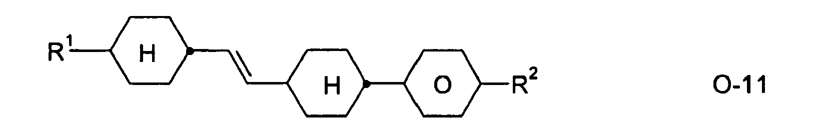 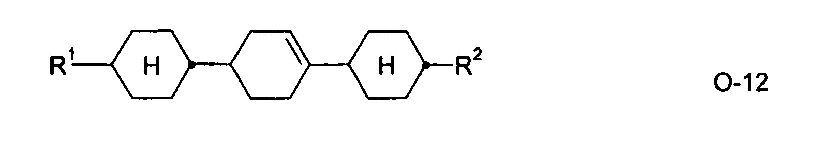 worin R¹ und R² in den Verbindungen O-1 bis O-12 die für R² in Anspruch 1 angegebenen Bedeutungen haben.

12. Verfahren zur Herstellung eines flüssigkristallinen Mediums nach einem oder mehreren der Ansprüche 1 bis 11, **dadurch gekennzeichnet, dass** man die Verbindung der Formel I2 mit mindestens einer oder mehreren Verbindungen der Formeln IIA und/oder IIB mischt und gegebenenfalls Additive zusetzt.

13. Verwendung des flüssigkristallinen Mediums nach einem oder mehreren der Ansprüche 1 bis 11 in VA-, IPS-, FFS- oder PALC-Anwendungen.

14. Elektrooptische Anzeige mit einer Aktivmatrix-Addressierung basierend auf dem ECB-, PALC-, FFS- oder dem IPS-Effekt, **dadurch gekennzeichnet, dass** sie als Dielektrikum ein flüssigkristallines Medium nach einem oder mehreren der Ansprüche 1 bis 11 enthält.

## Claims

1. Liquid-crystalline medium having negative dielectric anisotropy based on a mixture of polar compounds, **characterised in that** it comprises a compound of the formula 12 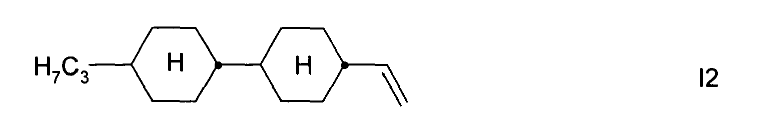 in amounts of 30-60% by weight, based on the medium,
and in addition one or more compounds of the formulae IIA and/or IIB 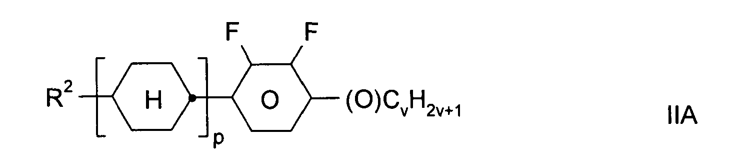 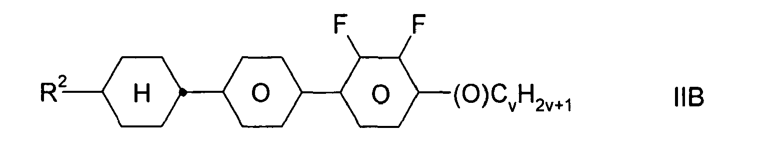 in which
R² denotes an alkyl or alkenyl radical having up to 15 C atoms which is unsubstituted, monosubstituted by CN or CF₃ or at least monosubstituted by halogen, where, in addition, one or more CH₂ groups in these radicals may each be replaced, independently of one another, by -O-, -S-, 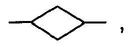 -C≡C-, -CO-,
-CO-O-, -O-CO- or -O-CO-O- in such a way that O atoms are not linked directly to one another, p denotes 1 or 2, and
v denotes 1 to 6.

2. Liquid-crystalline medium according to Claim 1, **characterised in that** it comprises a compound of the formula 12 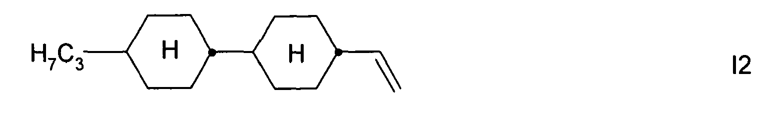 and a compound of the formula 13 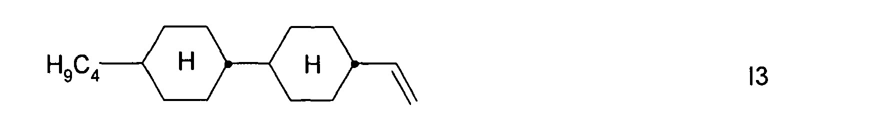 where the total concentration of the two compounds I1 and I3 in the mixture is ≥ 40% by weight.

3. Liquid-crystalline medium according to Claim 1 or 2, **characterised in that** it additionally comprises one or more compounds of the formula III 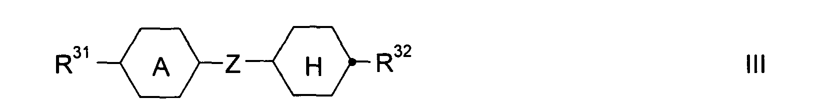 in which
R³¹ and R³² each, independently of one another, denote a straight- chain alkyl, alkoxyalkyl or alkoxy radical having up to 12 C atoms, and 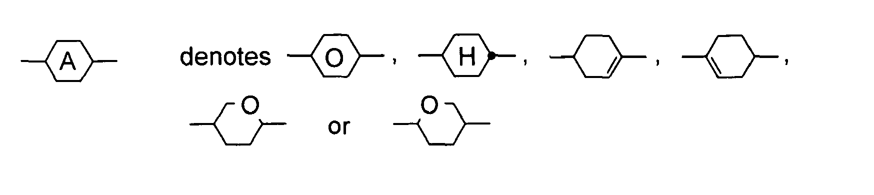
Z denotes a single bond, -CH₂CH₂-, -CH=CH-, -CF₂O-, -OCF₂-, -CH₂O-, -OCH₂-, -COO-, -OCO-, -C₂F₄-, -CF=CF-.

4. Liquid-crystalline medium according to one or more of Claims 1 to 3, **characterised in that** it comprises one or more compounds selected from the formulae IIIa to IIIh: 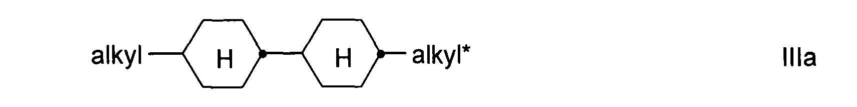 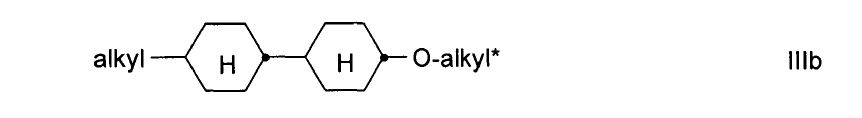 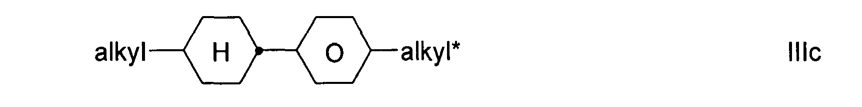 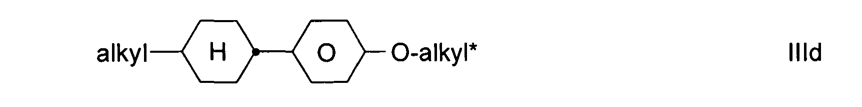 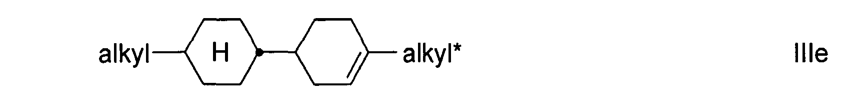 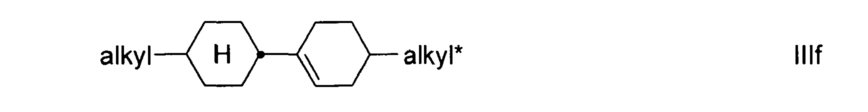 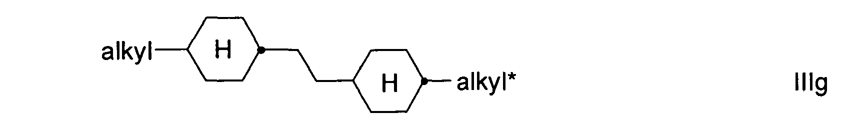 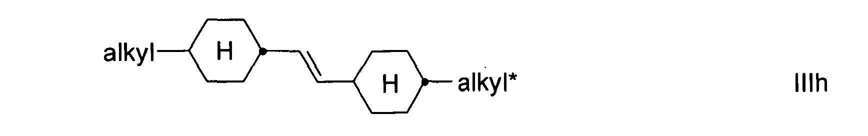 in which
alkyl and alkyl* each, independently of one another, denote a straight- chain alkyl radical having 1-6 C atoms.

5. Liquid-crystalline medium according to one or more of Claims 1 to 4, **characterised in that** the proportion of the compound of the formula 12 in the mixture as a whole is at least 35% by weight.

6. Liquid-crystalline medium according to one or more of Claims 1 to 5, **characterised in that** the proportion of compounds of the formulae IIA and/or IIB in the mixture as a whole is at least 20% by weight.

7. Liquid-crystalline medium according to one or more of Claims 1 to 6, **characterised in that** the proportion of compounds of the formula III in the mixture as a whole is at least 3% by weight.

8. Liquid-crystalline medium according to one or more of Claims 1 to 7, **characterised in that** it comprises at least one compound selected from the formulae I1 and 13 to 19

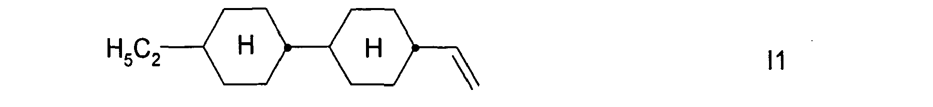

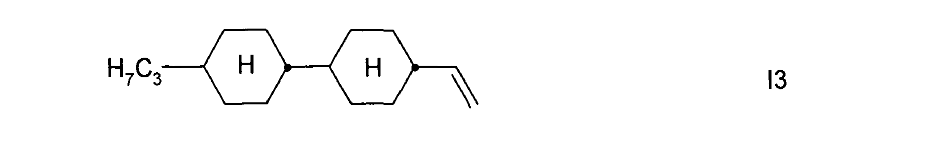

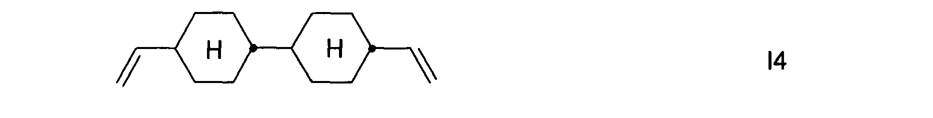

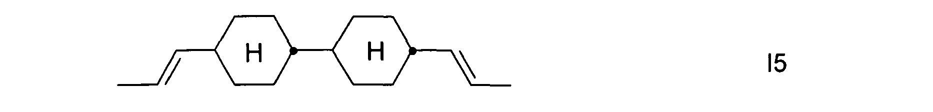

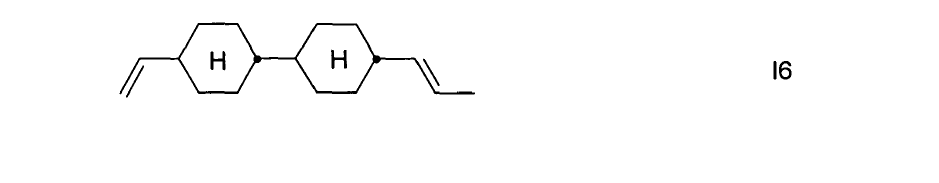

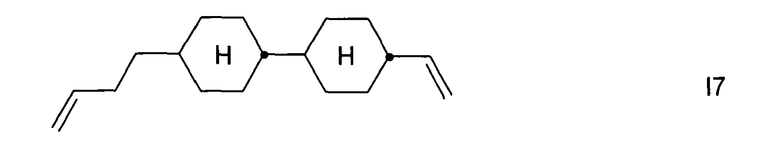

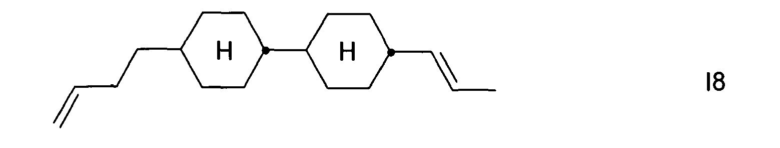

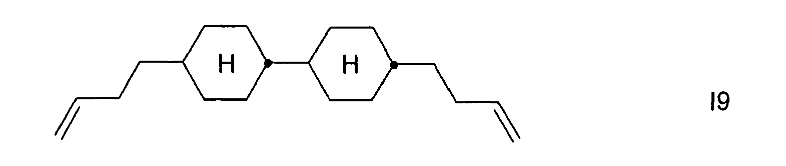

9. Liquid-crystalline medium according to one or more of Claims 1 to 8, **characterised in that** it additionally comprises one or more fluorinated terphenyls of the formulae T-1 to T-22 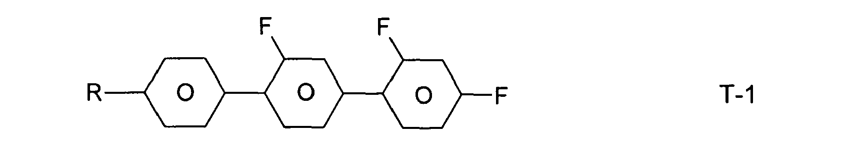 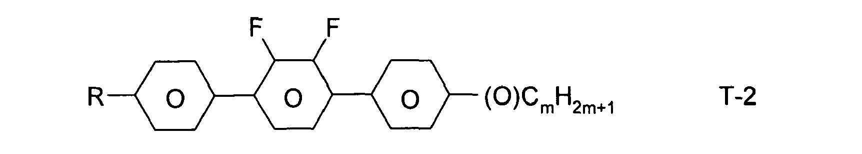 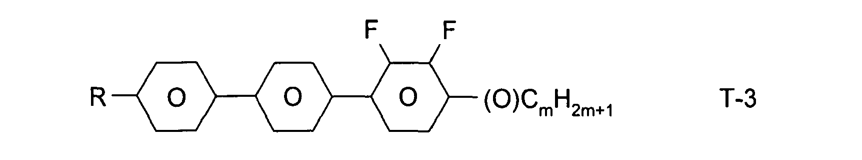 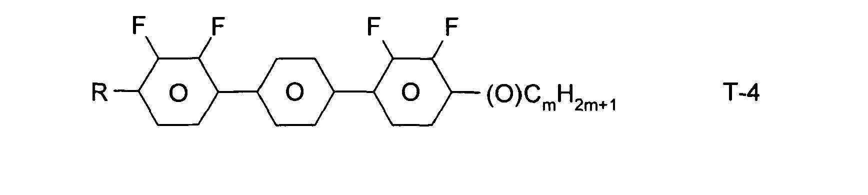 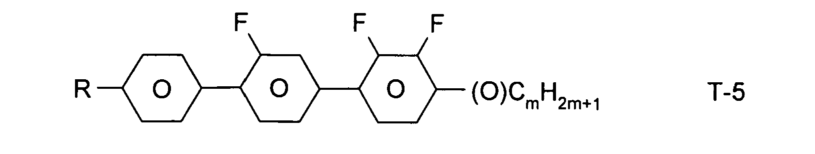 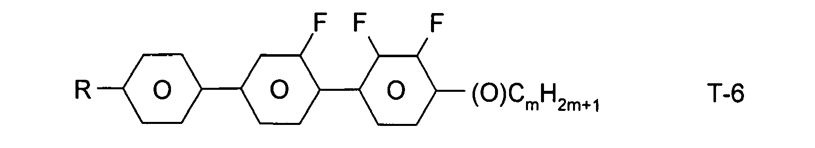 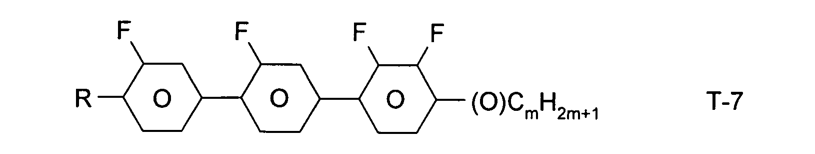 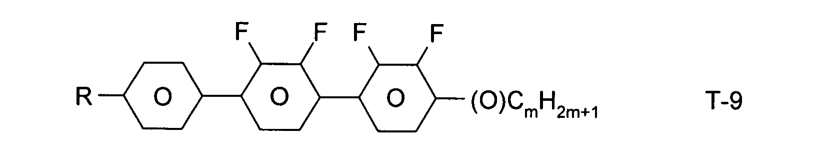 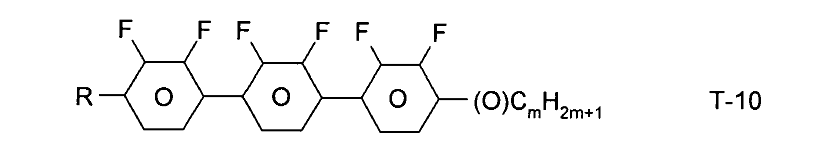 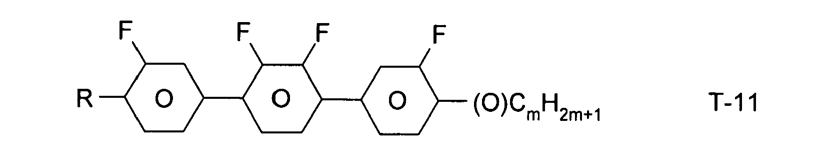 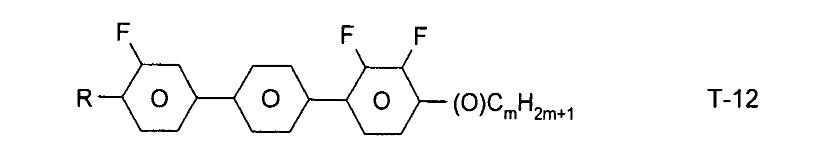 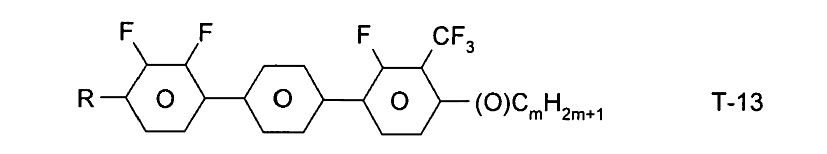 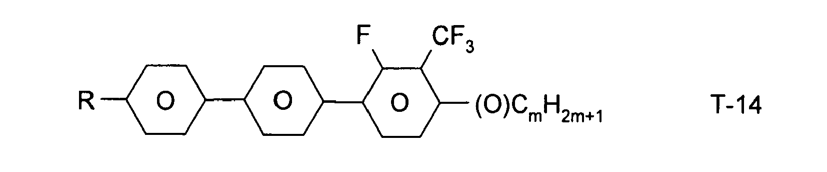 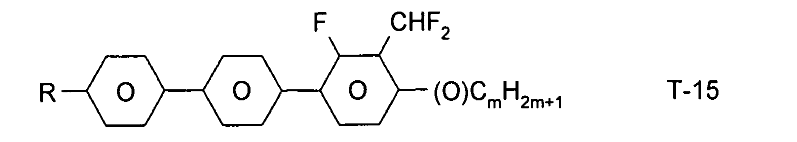 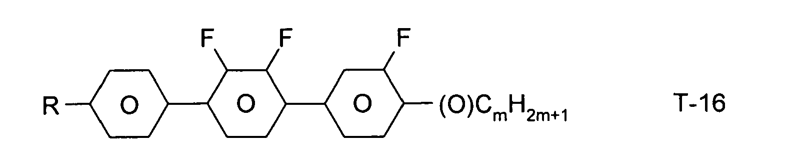 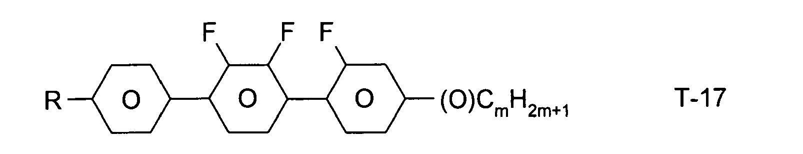 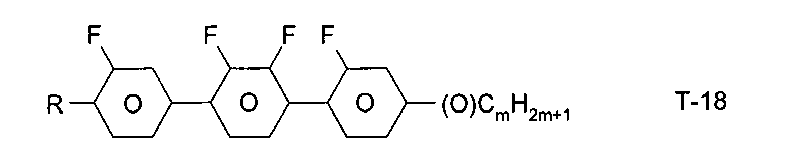 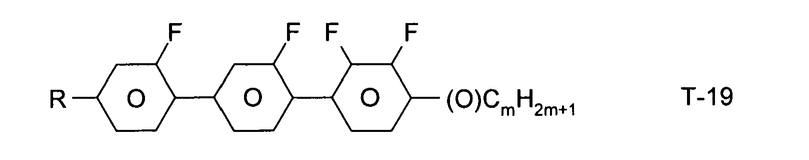 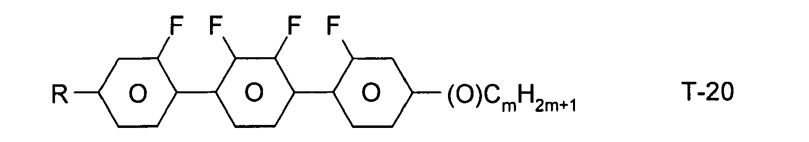 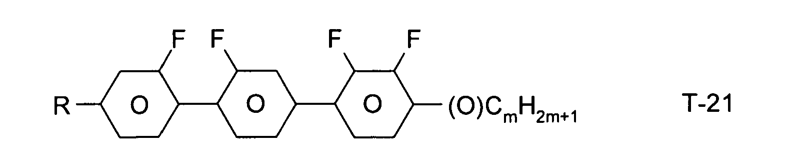 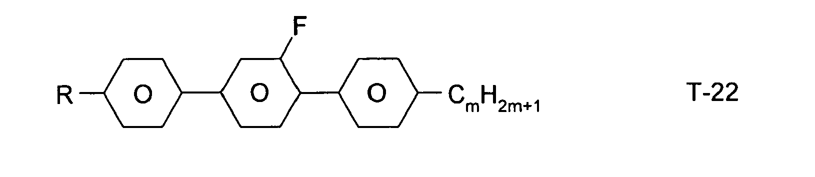 in which
R has the meaning indicated for R² in Claim 1.

10. Liquid-crystalline medium according to one or more of Claims 1 to 9, **characterised in that** it additionally comprises one or more compounds of the formulae 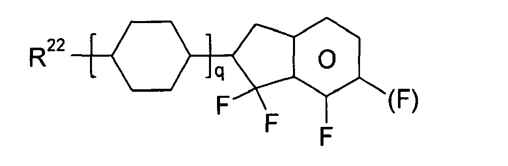 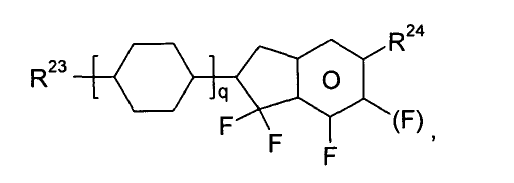 where
R²²⁻²³ each, independently of one another, denote an alkyl or alkenyl radical having up to 4 C atoms which is unsubstituted, monosubstituted by CN or CF₃ or at least monosubstituted by halogen, where, in addition, one or more CH₂ groups in these radicals may be replaced by -O-, -S-, 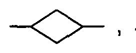 -C≡C-, -CF₂O-, -OCF₂-, -OC-O- or -O-CO- in such a way that O atoms are not linked directly to one another, and
R²⁴ denotes CH₃, C₂H₅ or n-C₃H₇, and q denotes 1 or 2.

11. Liquid-crystalline medium according to one or more of Claims 1 to 10, **characterised in that** it comprises at least one compound of the formulae O-1 to O-12 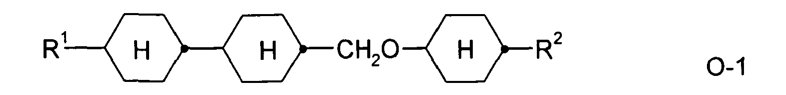 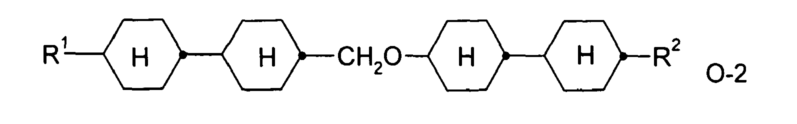 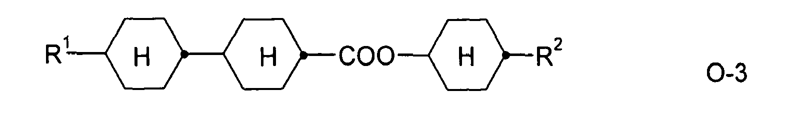 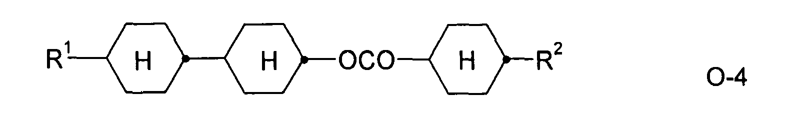 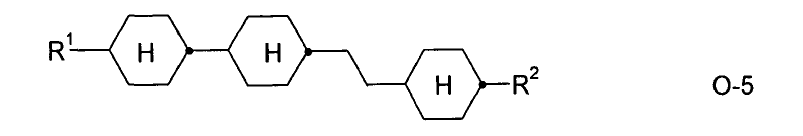 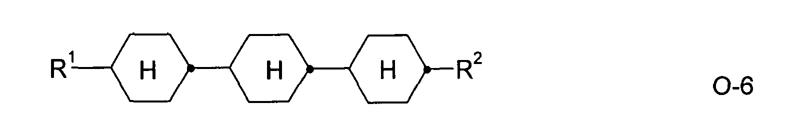 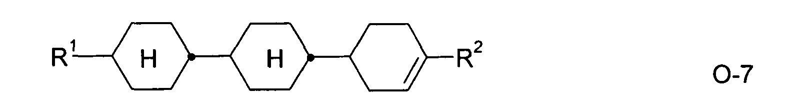 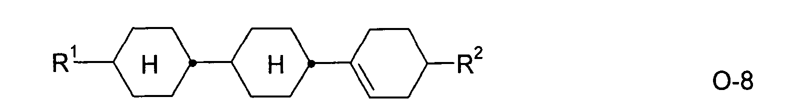 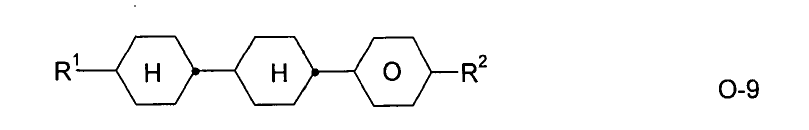 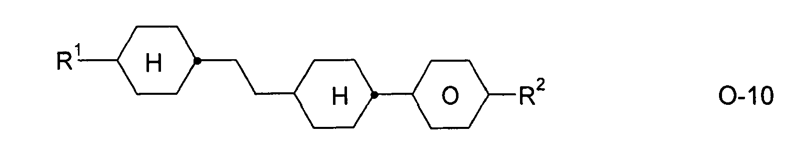 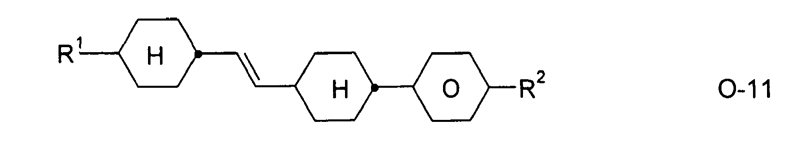 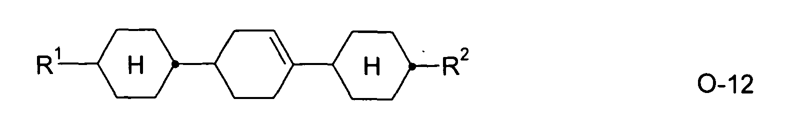 in which R¹ and R² in compounds O-1 to O-12 have the meanings indicated for R² in Claim 1.

12. Process for the preparation of a liquid-crystalline medium according to one or more of Claims 1 to 11, **characterised in that** the compound of the formula 12 is mixed with at least one or more compounds of the formulae IIA and/or IIB, and additives are optionally added.

13. Use of the liquid-crystalline medium according to one or more of Claims 1 to 11 in VA, IPS, FFS or PALC applications.

14. Electro-optical display with active-matrix addressing based on the ECB, PALC, FFS or IPS effect, **characterised in that** it contains, as dielectric, a liquid-crystalline medium according to one or more of Claims 1 to 11.

## Revendications

1. Milieu cristallin liquide présentant une anisotropie diélectrique négative, basé sur un mélange de composés polaires, **caractérisé en ce qu'**il comprend un composé de la formule I2 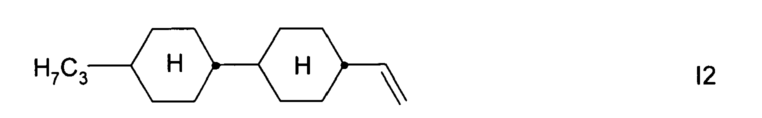 selon des quantités de 30-60% en poids, sur la base du milieu,
et en outre un ou plusieurs composés des formules IIA et/ou IIB 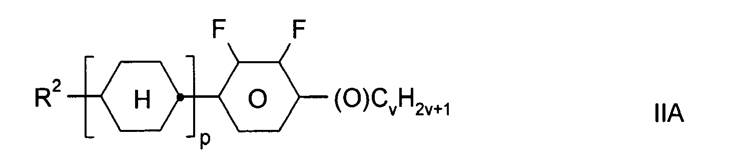 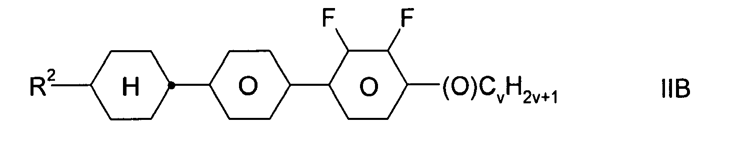 dans lesquelles
R² représente un radical alkyle ou alkényle comportant jusqu'à 15 atomes de C, lequel est non substitué, monosubstitué par CN ou CF₃ ou au moins monosubstituépar halogène, où en plus, un ou plusieurs groupes CH₂ dans ces radicaux peuvent chacun être remplacés, indépendamment les uns des autres, par -O-, -S-, 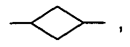 -C≡C, -CO, -CO-O-, -O-CO- ou -O-CO-O- de telle sorte que des atomes de O ne soient pas liés directement les uns aux autres,
P représente 1 ou 2, et
v représente 1 à 6.

2. Milieu cristallin liquide selon la revendication 1, **caractérisé en ce qu'**il comprend un composé de la formule I2 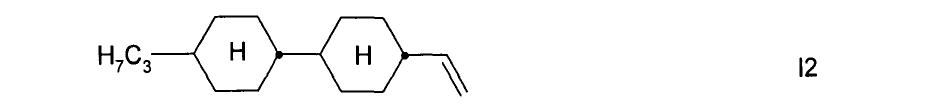 et un composé de la formule I3 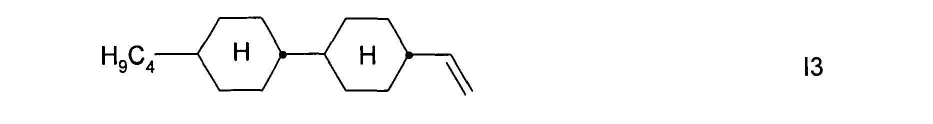 où la concentration totale des deux composés I1 et I3 dans le mélange est ≥ 40% en poids.

3. Milieu cristallin liquide selon la revendication 1 ou 2, **caractérisé en ce qu'**il comprend additionnellement un ou plusieurs composés de la formule III 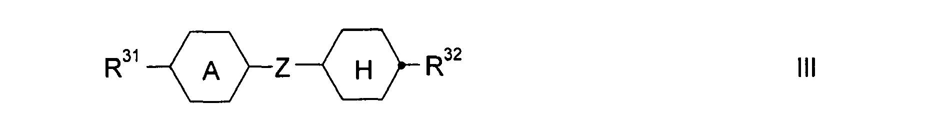 dans laquelle
R³¹ et R³² représentent, chacun indépendamment de l'autre, un radical alkyle, alcoxyalkyle ou alcoxy en chaîne droite comportant jusqu'à 12 atomes de C, et 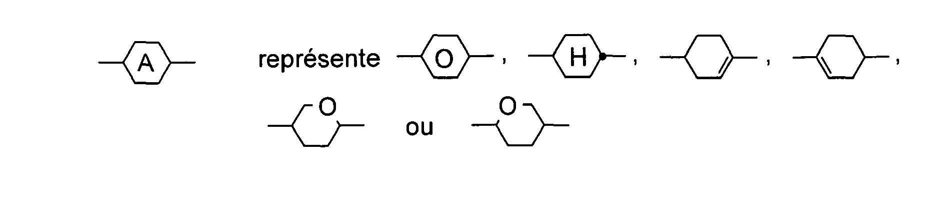
Z représente une liaison simple, -CH₂CH₂-, -CH=CH-, -CF₂O-, -OCF₂-, -CH₂O-, -OCH₂-, -COO-, -OCO-, -C₂F₄-, -CF=CF-.

4. Milieu cristallin liquide selon une ou plusieurs des revendications 1 à 3, **caractérisé en ce qu'**il comprend un ou plusieurs composés choisis parmi les formules IIIa à IIIh : 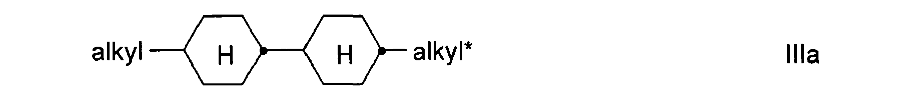 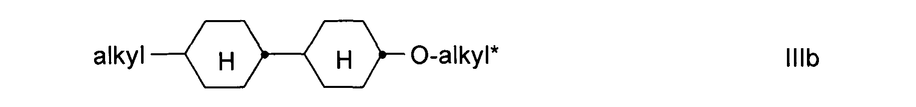 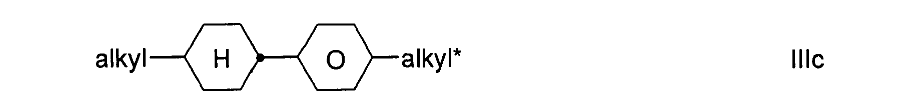 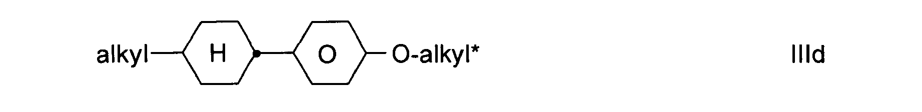 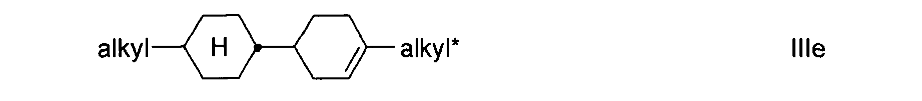 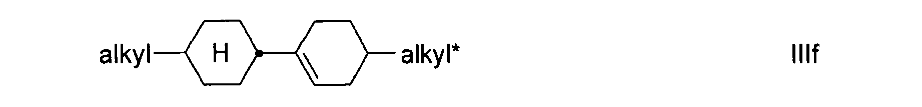 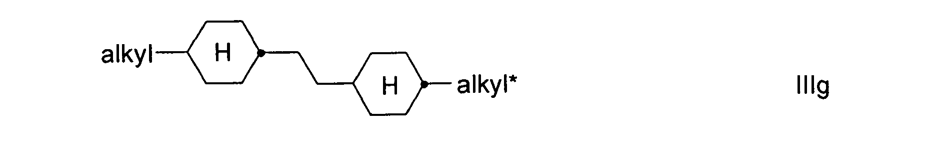 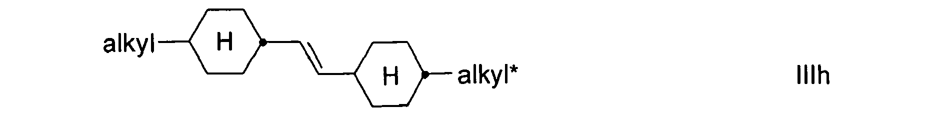 dans lesquelles
alkyl et alkyl* représentent, chacun indépendamment de l'autre, un radical alkyle en chaîne droite comportant 1-6 atomes de C.

5. Milieu cristallin liquide selon une ou plusieurs des revendications 1 à 4, **caractérisé en ce que** la proportion du composé de la formule 12 dans le mélange pris dans sa globalité est d'au moins 35% en poids.

6. Milieu cristallin liquide selon une ou plusieurs des revendications 1 à 5, **caractérisé en ce que** la proportion des composés des formules IIA et/ou IIB dans le mélange pris dans sa globalité est d'au moins 20% en poids.

7. Milieu cristallin liquide selon une ou plusieurs des revendications 1 à 6, **caractérisé en ce que** la proportion des composés de la formule III dans le mélange pris dans sa globalité est d'au moins 3% en poids.

8. Milieu cristallin liquide selon une ou plusieurs des revendications 1 à 7, **caractérisé en ce qu'**il comprend au moins un composé choisi parmi les formules I1 et I3 à I9

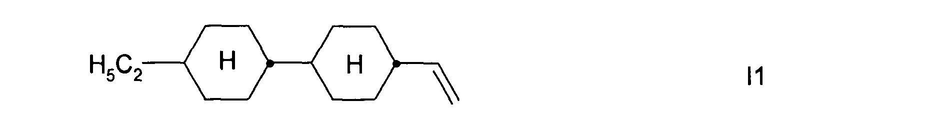

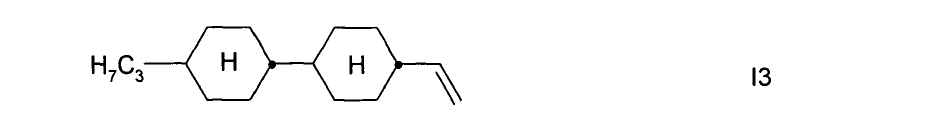

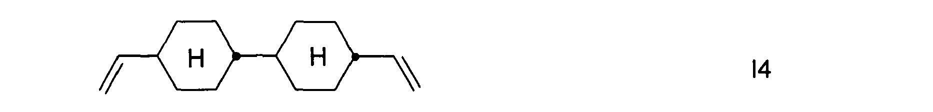

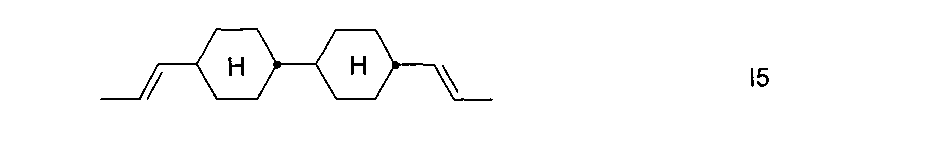

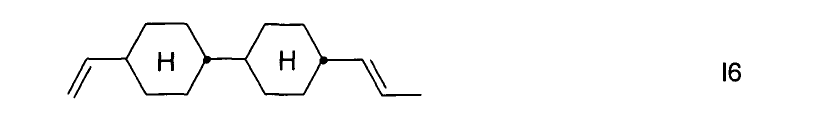

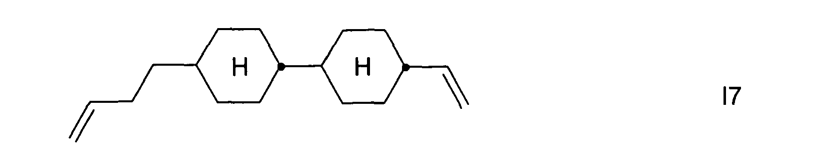

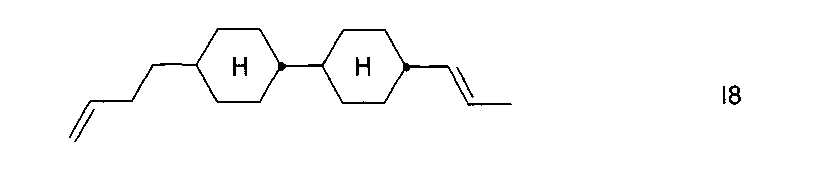

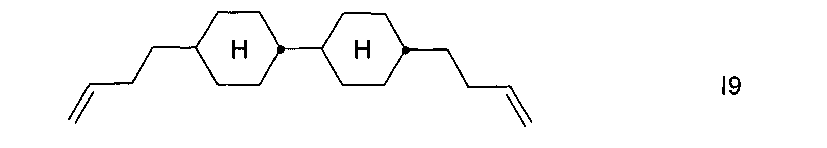

9. Milieu cristallin liquide selon une ou plusieurs des revendications 1 à 8, **caractérisé en ce qu'**il comprend additionnellement un ou plusieurs terphényls fluorés des formules T-1 à T-22 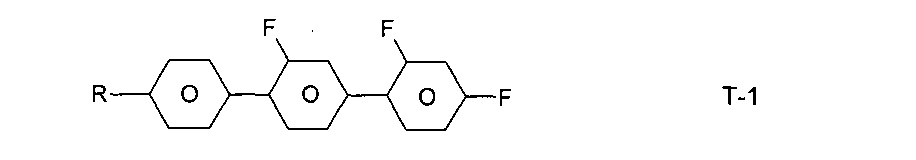 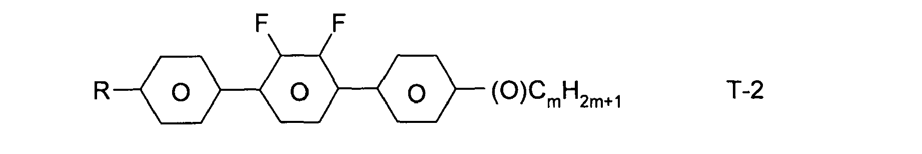 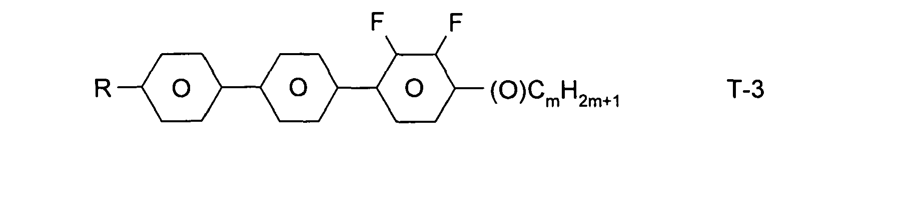 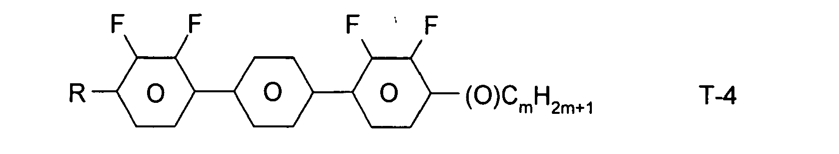 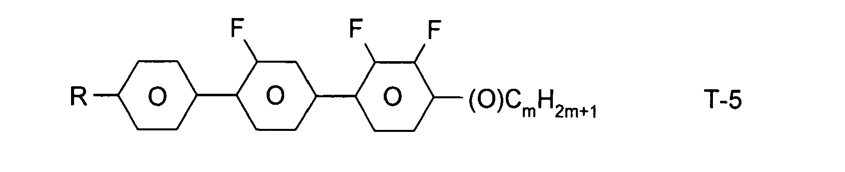 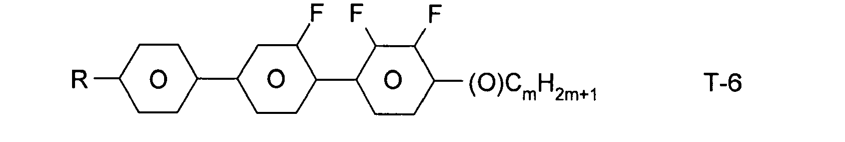 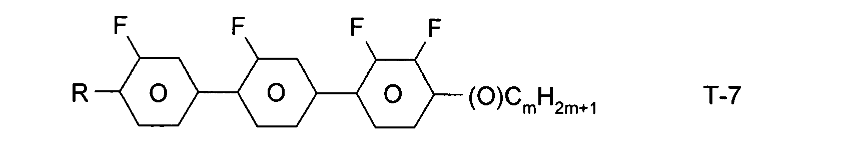 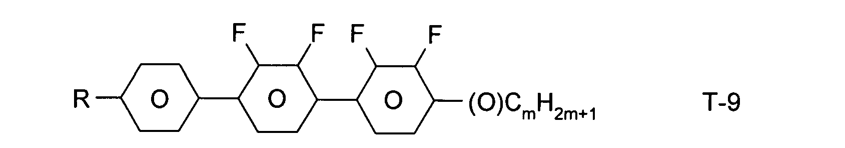 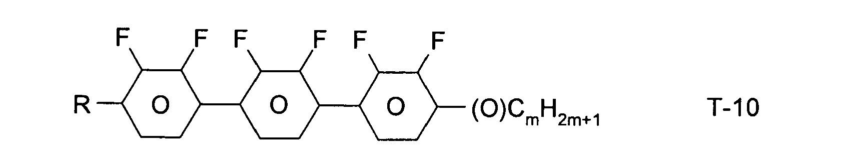 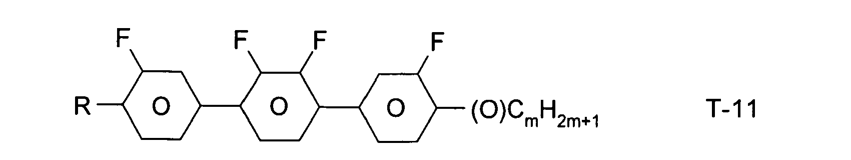 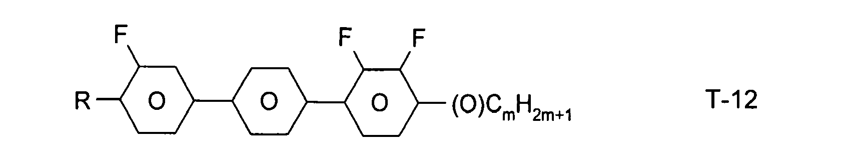 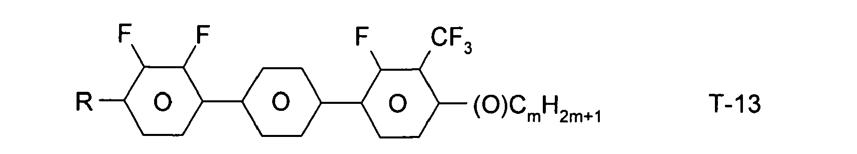 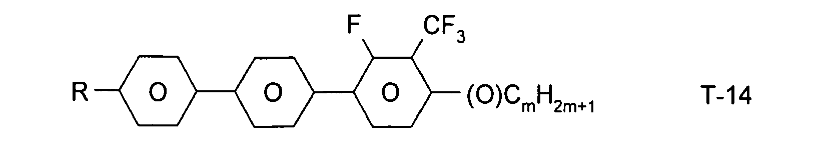 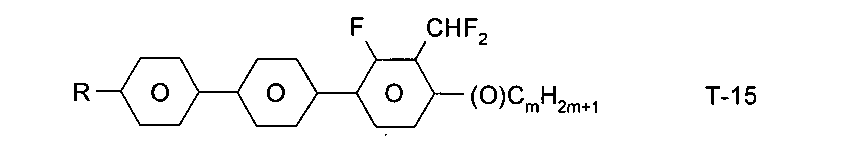 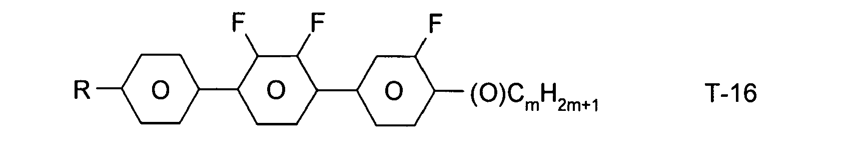 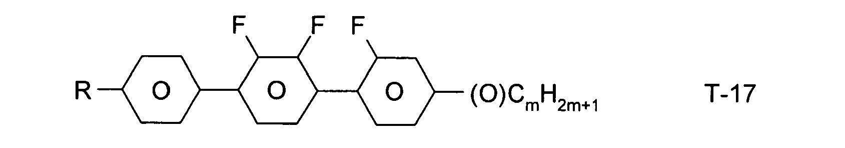 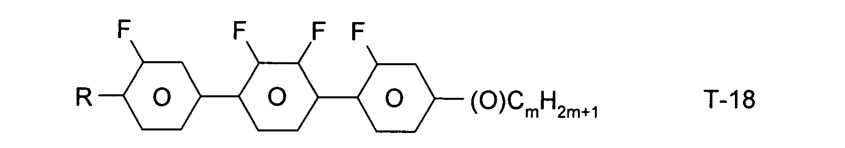 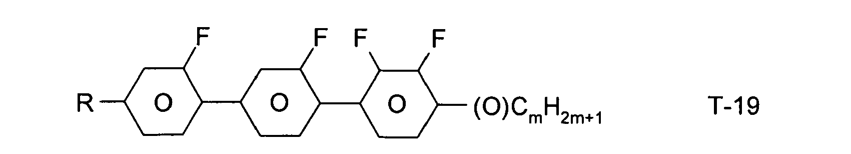 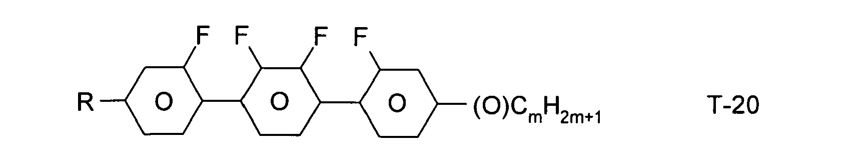 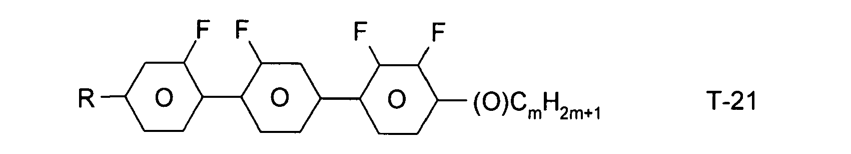 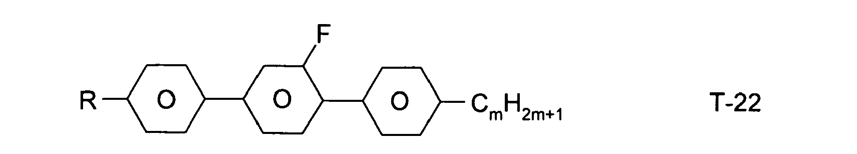 dans lesquelles
R présente la signification indiquée pour R² dans la revendication 1.

10. Milieu cristallin liquide selon une ou plusieurs des revendications 1 à 9, **caractérisé en ce qu'**il comprend additionnellement un ou plusieurs composés des formules 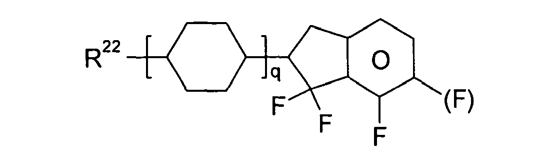 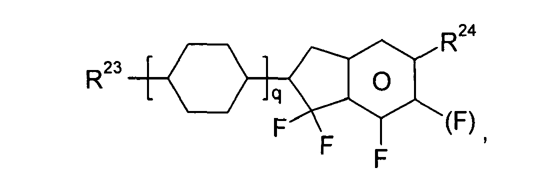 où
R²²⁻²³ représentent, chacun indépendamment de l'autre, un radical alkyle ou alkényle comportant jusqu'à 4 atomes de C, lequel est non substitué, monosubstitué par CN ou CF₃ ou au moins monosubstitué par halogène, où, en plus, un ou plusieurs groupes CH₂ dans ces
radicaux peuvent être remplacés par -O-, -S-, 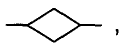 -C≡C-, -CF₂O-, -OCF₂-, -OC-O- ou -O-CO- de telle sorte que des atomes de O ne soient pas liés directement les uns aux autres, et
R²⁴ représente CH₃, C₂H₅ ou n-C₃H₇, et q représente 1 ou 2.

11. Milieu cristallin liquide selon une ou plusieurs des revendications 1 à 10, **caractérisé en ce qu'**il comprend au moins un composé des formules O-1 à O-12 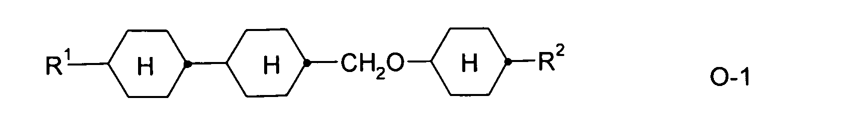 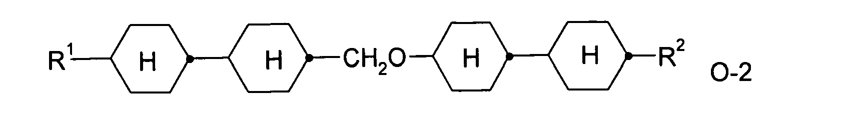 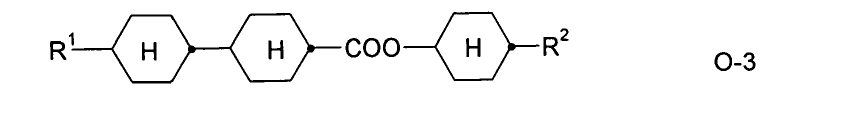 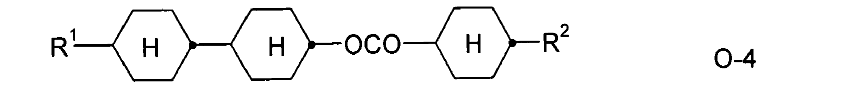 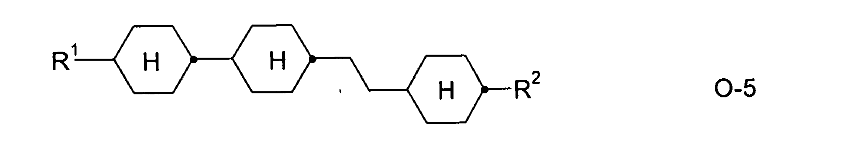 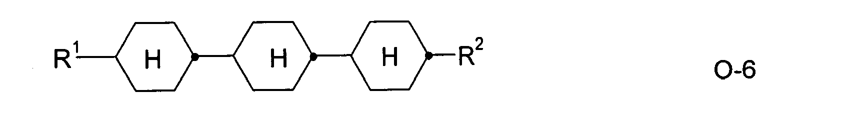 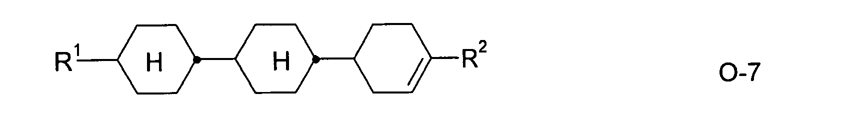 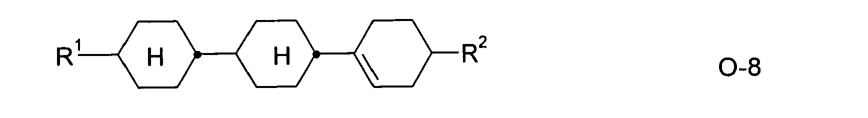 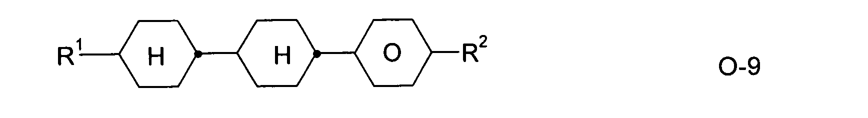 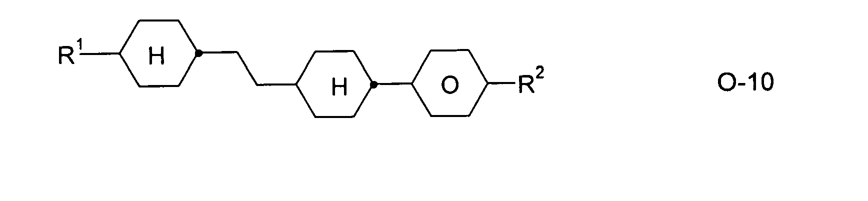 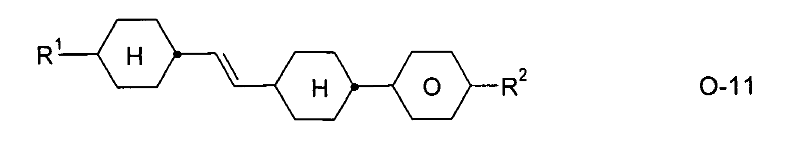 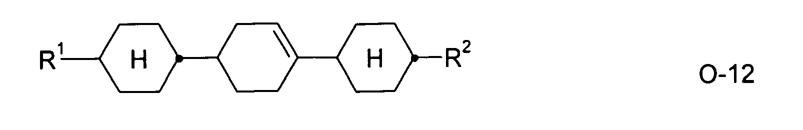 dans lesquelles R¹ et R² dans les composés O-1 à O-12 présentent les significations indiquées pour R² dans la revendication 1.

12. Procédé pour la préparation d'un milieu cristallin liquide selon une ou plusieurs des revendications 1 à 11, **caractérisé en ce que** le composé de la formule I2 est mélangé avec au moins un ou plusieurs composés des formules IIA et/ou IIB, et des additifs sont en option ajoutés.

13. Utilisation du milieu cristallin liquide selon une ou plusieurs des revendications 1 à 11 dans des applications VA, IPS, FFS ou PALC.

14. Affichage électro-optique avec adressage par matrice active basé sur l'effet ECB, PALC, FFS ou IPS, **caractérisé en ce qu'**il contient, en tant que diélectrique, un milieu cristallin liquide selon une ou plusieurs des revendications 1 à 11.
